# EUROPÄISCHE PATENTSCHRIFT

(11) **EP 3 863 161 B1**
(45) Veröffentlichungstag und Bekanntmachung des Hinweises auf die Patenterteilung: **21.02.2024**
(21) Anmeldenummer: 20165017.3
(22) Anmeldetag: 23.03.2020
(51) Int. Cl.: H02K 15/03, H02K 1/276

(54) **BESTÜCKUNGSVORRICHTUNG UND SYSTEM UMFASSEND EINE BESTÜCKUNGSVORRICHTUNG UND EINEN ROTOR**
MOUNTING APPARATUS AND SYSTEM COMPRISING A MOUNTING DEVICE AND A ROTOR
DISPOSITIF D'ASSEMBLAGE ET SYSTÈME COMPRENANT UN DISPOSITIF D'ASSEMBLAGE ET UN ROTOR

(30) Priorität: 05.02.2020 DE 102020102945
(43) Veröffentlichungstag der Anmeldung: 11.08.2021
(73) Patentinhaber: Grob-Werke GmbH & Co. KG, 87719 Mindelheim (DE)
(72) Erfinder: Schmölz, Markus, 87668 Rieden (DE)
(74) Vertreter: KASTEL Patentanwälte PartG mbB

(56) Entgegenhaltungen:
- EP-A1- 2 571 148
- CN-A- 107 086 735
- CN-U- 208 939 789
- JP-A- 2016 208 695

## Beschreibung

Die Erfindung betrifft eine Bestückungsvorrichtung zum Einführen von Magneten in Magnetaufnahmebereiche eines Rotors einer elektrischen Maschine. Zu der Erfindung gehört auch ein System, welches einen Rotor und die erfindungsgemäße Bestückungsvorrichtung umfasst, sowie ein Verfahren zum Einführen von Magneten in Magnetaufnahmebereiche eines Rotors einer elektrischen Maschine.

Unter elektrischen Maschinen werden insbesondere Maschinen zum Umwandeln elektrischer Energie in Bewegungsenergie und/oder Maschinen zum Umwandeln von Bewegungsenergie in elektrische Energie verstanden. Insbesondere sind darunter Elektromotoren und Generatoren zu verstehen.

Bei der Herstellung von Rotoren elektrischer Maschinen werden Magnete in den Rotor oder das Blechpaket des Rotors eingesetzt. Die Magnete haben im Rotor verschiedene Orientierungen.

Um die Magnete in den Rotor einzusetzen, ist es aus dem allgemeinen Stand der Technik bekannt, diese mit Robotern in den Rotor oder das Blechpaket des Rotors einzusetzen. Hierzu entnimmt der Roboter, insbesondere ein Roboterarm, Magnete aus einem Magazin und setzt diese einzeln in eine Ladeplatte oder direkt in den Rotor ein. Mit Magazin ist insbesondere ein Lager gemeint, in dem die Magnete gelagert sind.

Anstelle von Robotern können auch speziell dafür vorgesehene Vorrichtungen zum Einsetzen von Magneten in Rotoren oder Blechpakete vorgesehen sein.

Hierzu beschreibt beispielsweise die JP 2016 208 695 A eine Werkstückeinführungsvorrichtung. Die Werkstückeinführungsvorrichtung führt Magnete in ein Einführungsloch eines Rotors ein. Hierzu umfasst die Werkstückeinführungsvorrichtung ein Formstück, welches dazu eingerichtet ist, Magnete in einer vorbestimmten Orientierung aufzunehmen und dem Einführungsloch zuzuführen.

Alternativ ist in der CN 207 251 402 U eine automatisierte Vorrichtung zum Zuführen von Magneten in einen Rotor beschrieben. Hierzu umfasst die Vorrichtung Führungsarme, welche die Magnete in verschiedenen Orientierungen separat dem Rotor zuführen.

Aus der KR 101 972 348 B1 ist eine Vorrichtung zum Einführen eines Magneten in einen Rotorkern beschrieben. Die Vorrichtung umfasst eine Magnetzufuhreinheit, die einen Magnet in ein Einführungsloch des Rotorkerns einführt, und eine Magnetanordnungseinheit, in die eine Vielzahl von durch die Magnetzufuhreinheit zugeführten Magneten vorübergehend eingeführt wird, bevor sie in das Einführungsloch des Rotorkerns eingeführt werden. Ferner umfasst die Vorrichtung eine Magneteinsetzeinheit, die unter der Magnetanordnungseinheit und über den Rotorkern positioniert wird, der durch eine Rotorkernzuführeinheit bewegt wird, um die Vielzahl von Magneten, die vorübergehend in die Magnetanordnungseinheit eingesetzt werden, dazu zu bringen, gemeinsam in das Einsetzloch des Rotorkerns eingesetzt zu werden.

In der CN 107 086 735 A ist eine Permanentmagnet-Synchronmotor-Rotor-Einsatztyp-Magnet-Schubvorrichtung beschrieben. Die Schubvorrichtung umfasst einen Rotor, eine rotierende Welle, eine Magnet-Positionierungsplatte, eine Magnet-Stapelbox und einen Schieber. Der Rotor weist einen Rotorkern auf, der auf der rotierenden Welle gelagert ist. Der Rotorkern, die Positionierungsplatte und die rotierende Welle sind alle durch eine Passfeder fest miteinander verbunden. Der Rotor ist ferner mit mehreren Paaren von axial verlaufenden Magnet-Befestigungsnuten, welche gleichmäßig entlang der Umfangsrichtung verteilt angeordnet sind, versehen. Die Magnet-Positionierungsplatte hat die Form einer Scheibe. Die Magnet-Positionierplatte ist gleichmäßig mit einer Vielzahl von Paaren von sich axial erstreckenden Magnet-Führungsnuten entlang der Umfangsrichtung versehen. Die Magnet-Positionierscheibe befindet sich in der Nähe des Rotorkerns, und jedes Paar von Magnet-Führungsnuten liegt seinem entsprechenden Paar von Magnet-Befestigungsnuten gegenüber. Die Magnet-Stapelbox weist einen Einlass und einen Magnetauslass auf. Über den Einlass wird der Schieber in die Magnet-Stapelbox zum Schieben des Magneten aus dem Magnetauslass geschoben. Der Ausgang des Magneten und der Einlass des Schiebers, welche die Magnete durch den Ausgang schiebt, befinden sich jeweils auf beiden Seitenwänden in Längsrichtung der Magnet-Stapelbox. Zum Einführen der Magnete von der Magnet-Stapelbox in die Magnet-Positionierungsplatte wird zunächst der Magnetauslass der Magnet-Stapelbox zu einer der Magnet-Führungsnuten ausgerichtet. Anschließend wird der Schieber verwendet, um den Magnet in den Eingang der Positionierungsplatte zu schieben, bis der Magnet entlang der Führungsnut der Positionierungsplatte in die Befestigungsnut des Rotors geschoben ist. Anschließend wird die Magnet-Stapelbox wieder zu einer anderen Magnet-Führungsnut ausgerichtet und der Magnet mit dem Schieber in die Führungsnut der Positionierungsplatte geschoben.

Die Magnete haben in dem Rotor einer elektrischen Maschine verschiedene Orientierungen, insbesondere Lageorientierungen. Die Magnete werden meist alle gleich orientiert zur Verfügung gestellt, wie zum Beispiel in Blistern. Die Magnete müssen daher in eine andere Lage oder Orientierung gebracht werden.

Die Erfindung hat sich zur Aufgabe gestellt, eine Bestückungsvorrichtung, ein System sowie ein Verfahren bereitzustellen, mittels welcher oder welchem auf besonders einfache, schnelle und zuversichtliche Art und Weise Magnete einem Rotor, insbesondere in der vorgegebenen Orientierung, zuführbar sind.

Zum Lösen dieser Aufgabe schafft die Erfindung eine Bestückungsvorrichtung, ein System sowie ein Verfahren mit den Merkmalen der unabhängigen Patentansprüche. Vorteilhafte Ausgestaltungen mit zweckmäßigen und nicht trivialen Weiterbildungen der Erfindung sind in den abhängigen Patentansprüchen angegeben.

Die Erfindung schafft eine Bestückungsvorrichtung zum Einführen von Magneten in Magnetaufnahmebereiche eines Rotors einer elektrischen Maschine. Mit Magnetaufnahmebereiche sind insbesondere Kanäle oder Vertiefungen gemeint, welche dazu eingerichtet sind, Magnete aufzunehmen. Zum Beispiel können die Magnete in den Magnetaufnahmebereichen übereinandergestapelt sein. Insbesondere ist eine Form der Magnetaufnahmebereiche an eine Form der Magnete angepasst. Sind die Magnete beispielweise im Querschnitt rechteckig ausgebildet, so sind die Magnetaufnahmebereiche im Querschnitt rechteckig ausgebildet.

Die Bestückungsvorrichtung umfasst eine Ausrichtungseinrichtung, welche dazu eingerichtet ist, die Magnete aufzunehmen und auszurichten. Mit "Ausrichten" ist insbesondere gemeint, dass die Ausrichtungseinrichtung dazu eingerichtet ist, die Magnete zu orientieren oder in eine vorbestimmte Lage zu bringen. Hierzu umfasst die Ausrichtungseinrichtung zum Ausrichten und zum Aufnehmen der Magnete zumindest einen Kanal. Mit anderen Worten können die Magnete in dem Kanal aufgenommen und durch dessen Form oder Anordnung so bewegt werden, dass sie in eine vorbestimmte Lage ausgerichtet oder orientiert werden. Mit "Kanal" ist insbesondere ein Durchgang oder röhrenförmiger Verbindungsgang gemeint. Ferner ist eine Form des zumindest einen Kanals an eine Form der Magnete angepasst ist. Mit anderen Worten kann der Kanal im Querschnitt an eine Außenkontur der Magnete angepasst sein. Sind die Magnete beispielweise im Querschnitt rechteckig ausgebildet, so ist der Kanal im Querschnitt rechteckig ausgebildet. Ferner ist der zumindest eine Kanal bevorzugt um ein gewisses Maß größer als der Magnet oder die Magnete, insbesondere sodass der Magnet oder die Magnete durch den Kanal gleiten oder rutschen kann oder können.

Der Kanal weist einen Kanaleinlass, welcher an einer Stirnseite oder Stirnfläche der Ausrichtungseinrichtung angeordnet ist und über welchen die Magnete dem Kanal zuführbar sind, und einen gegenüber dem Kanaleinlass angeordneten Kanalauslass auf, welcher an einer der Stirnseite gegenüberliegenden Stirnseite der Ausrichtungseinrichtung angeordnet ist und über welchen die Magnete aus dem Kanal, insbesondere zum Einführen in die Magnetaufnahmebereiche des Rotors, abführbar sind. Mit anderen Worten kann der zumindest eine Kanal durch den Kanaleinlass und den Kanalauslass beidseitig oder an beiden Enden offen ausgebildet sein.

Ferner ist es vorgesehen, dass der zumindest eine Kanal in sich verdreht ist. Dabei kann der zumindest eine Kanal insbesondere derart verdreht sein, dass der Kanaleinlass und der Kanalauslass bezogen auf eine Ebene der jeweiligen Stirnseite unterschiedlich zueinander ausgerichtet sind. Mit "Ebene der jeweiligen Stirnseite" ist insbesondere eine Querschnittsfläche, welche insbesondere mit einer Transversalebene der Bestückungsvorrichtung zusammenfällt, gemeint. Insbesondere erstreckt sich die Querschnittsfläche senkrecht zu einer Haupterstreckungsrichtung der Bestückungsvorrichtung. Mit anderen Worten kann der zumindest eine Kanal derart verdreht sein, dass der Kanaleinlass eine andere Orientierung als der Kanalauslass aufweist. Mit "verdreht" ist insbesondere verwunden oder tordiert oder, dass der zumindest eine Kanal um eine eigene Achse gewunden ist, gemeint.

Die Ausrichtungseinrichtung hat den Vorteil, dass hierdurch bewegte Teile zum Ausrichten der Magnete reduziert werden können. Ferner wird bei der Herstellung oder bei der Einführung der Magnete in den Rotor eine geringe Taktzeit benötigt. Zudem kann die Zuführung der Magnete linear und für jeden Magnet gleich erfolgen. Durch eine derartige spezifische Ausgestaltung des zumindest einen Kanals können die Magnete auf besonders einfache und zuverlässige Art und Weise, insbesondere entsprechend der Ausrichtung oder Orientierung der Magnetaufnahmebereiche, ausgerichtet oder orientiert werden.

Eine vorteilhafte Ausführungsform sieht vor, dass die Bestückungsvorrichtung mehrere Kanäle aufweist, wobei die Kanäle in einer Umfangsrichtung der Ausrichtungseinrichtung nebeneinander in der Ausrichtungseinrichtung angeordnet sind und sich durch die Ausrichtungseinrichtung, insbesondere in eine Haupterstreckungsrichtung der Bestückungsvorrichtung, von der Stirnseite der Ausrichtungseinrichtung zu der gegenüberliegenden Stirnseite der Ausrichtungseinrichtung erstrecken. Bevorzugt weist die Ausrichtungseinrichtung ferner die Form eines Zylinders oder eine zylindrische Form auf. Bevorzugt bilden dabei die Stirnseiten die runden Grundflächen der zylindrischen Ausrichtungseinrichtung. Besonders bevorzugt sind die jeweiligen Kanäle im Uhrzeigersinn und/oder gegen den Uhrzeigersinn verdreht. Beispielsweise sind die Kanäle abwechselnd im Uhrzeigersinn und gegen den Uhrzeigersinn verdreht. Hierdurch sind insbesondere die Kanalauslässe der nebeneinander angeordneten Kanäle in Umfangsrichtung in einer Zickzackform angeordnet. Ferner sind die Kanalauslässe insbesondere abwechselnd zu einem Radius der Ausrichtungseinrichtung, insbesondere der Stirnseite, hin und/oder von dem Radius der Ausrichtungseinrichtung weg geneigt. Durch die mehreren Kanäle können mehrere oder gleich alle Magnetaufnahmebereiche auf einmal befüllt werden. Hierdurch können Zeit und Kosten bei der Herstellung von Rotoren eingespart werden.

Eine vorteilhafte Weiterbildung sieht vor, dass die Bestückungsvorrichtung eine Zuführeinrichtung aufweist, welche dazu eingerichtet ist, die Magnete einzeln dem zumindest einen Kanal über den Kanaleinlass der Ausrichtungseinrichtung zuzuführen. Bevorzugt können die Magnete der Ausrichtungseinrichtung durch die Zuführeinrichtung einzeln zeitlich nacheinander zugeführt werden. Bevorzugt weist die Zuführeinrichtung eine zylindrische Form oder die Form eines Zylinders auf. Durch die Zuführeinrichtung können die Magnete der Ausrichtungseinrichtung besonders einfach und zuverlässig zugeführt werden.

Eine weitere vorteilhafte Ausführungsform sieht vor, dass die Zuführeinrichtung zumindest einen Zuführbereich aufweist, welcher dazu eingerichtet ist, jeweils einen Magnet aufzunehmen, wobei der zumindest eine Zuführbereich dem zumindest einen Kanal oder dem Kanaleinlass des zumindest einen Kanals der Ausrichtungseinrichtung zugeordnet oder zugewiesen ist. Dabei sind der zumindest eine Zuführbereich und der zumindest eine Kanal in die Haupterstreckungsrichtung der Bestückungsvorrichtung, welche sich senkrecht zur Ebene der jeweiligen Stirnseite der Ausrichteinrichtung erstreckt, derart aneinander angeordnet, dass ein Magnet von dem Zuführbereich über den Kanaleinlass in den Kanal einführbar ist. Bevorzugt ist eine Form des Zuführbereichs an eine Form des Magneten und/oder des Kanals, insbesondere im Querschnitt, angepasst. Insbesondere weist der Zuführbereich eine U-förmige Form oder rechteckige Kontur auf. Durch den zumindest einen Zuführbereich können die Magnete besonders zuverlässig aufgenommen und dem zumindest einen Kanal zugeführt werden.

In vorteilhafter Weise umfasst die Zuführeinrichtung eine Beförderungseinheit, wobei die Beförderungseinheit dazu eingerichtet ist, die Magnete radial in den zumindest einen Zuführbereich der Zuführeinrichtung zu schieben. Hierzu ist der Zuführbereich bevorzugt einseitig offen oder U-förmig ausgebildet.

Besonders bevorzugt weist die Ausrichtungseinrichtung mehrere Kanäle auf. Ferner weist die Zuführeinrichtung bevorzugt mehrere Zuführbereiche auf. Dabei können die Zuführbereiche in Umfangsrichtung der Zuführeinrichtung nebeneinander angeordnet sein. Ferner kann jeweils ein Zuführbereich einem Kanal oder Kanaleinlass zugeordnet oder zugewiesen sein. Bevorzugt stimmt eine Anzahl der Zuführbereiche mit einer Anzahl an Kanälen der Ausrichtungseinrichtung überein.

In vorteilhafter Weise weist die Bestückungsvorrichtung eine Aufnahmeeinrichtung auf, welche insbesondere als eine Ladeplatte ausgebildet ist. Die Aufnahmeeinrichtung ist bevorzugt dazu eingerichtet, die Magnete von der Ausrichtungseinrichtung aufzunehmen. Ferner weist die Aufnahmeeinrichtung zumindest einen Aufnahmebereich auf, wobei der zumindest eine Aufnahmebereich dem zumindest einen Kanal zugeordnet oder zugewiesen ist. Die dem Kanal zugeführten Magnete sind über den Kanalauslass dem den Kanal zugeordneten Aufnahmebereich zuführbar, wobei insbesondere zum Zuführen der Magnete in den zumindest einen Aufnahmebereich eine Orientierung des zumindest einen Aufnahmebereichs an eine Orientierung des Kanalauslasses angepasst ist. Bevorzugt weist die Aufnahmeeinrichtung eine zylindrische Form oder die Form eines Zylinders auf. Der zumindest eine Aufnahmebereich ist bevorzugt kanalförmig und/oder an eine Form der Magnete angepasst. Der zumindest eine Aufnahmebereich erstreckt sich bevorzugt in die Haupterstreckungsrichtung von einer Stirnseite der Aufnahmeeinrichtung zu gegenüberliegender Stirnseite der Aufnahmeeinrichtung. Bevorzugt sind in die Haupterstreckungsrichtung der Bestückungsvorrichtung aneinander oder aufeinander folgend und/oder einander zugewiesen oder zugeordnet der zumindest eine Zuführbereich, der zumindest eine Kanal und der zumindest eine Aufnahmebereich angeordnet.

Gemäß einer vorteilhaften Weiterbildung kann es vorgesehen sein, dass die Ausrichtungseinrichtung zwischen der Zuführeinrichtung und der Aufnahmeeinrichtung angeordnet ist. Bevorzugt können die Zuführeinrichtung und die Aufnahmeeinrichtung miteinander gekoppelt oder verbunden sein.

Eine weitere vorteilhafte Ausführungsform sieht vor, dass der Aufnahmebereich und der Kanalauslass in eine Haupterstreckungsrichtung der Bestückungsvorrichtung, insbesondere deckungsgleich, aneinander oder übereinander angeordnet sind. Bevorzugt weist die Aufnahmeeinrichtung mehrere Aufnahmebereiche auf, wobei je ein Aufnahmebereich einem Kanalausgang zugeordnet oder zugewiesen ist. Bevorzugt stimmt die Anzahl an Aufnahmebereichen mit der Anzahl an Kanälen überein. Insbesondere ist eine Orientierung oder Ausrichtung des Aufnahmebereichs an eine Orientierung oder Ausrichtung des Kanalauslasses angepasst. Bevorzugt ist der Aufnahmebereich auch als ein Kanal oder ein Durchgang ausgebildet. Bevorzugt verlaufen die Aufnahmebereiche in eine Haupterstreckungsrichtung der Bestückungsvorrichtung, insbesondere gerade, durch die Aufnahmeeinrichtung. Besonders bevorzugt sind die nebeneinander angeordneten Aufnahmebereiche in Umfangsrichtung in einer Zickzackform angeordnet. Hierdurch sind die Aufnahmebereiche insbesondere abwechselnd zu einem Radius der Aufnahmeeinrichtung hin und/oder von dem Radius der Aufnahmeeinrichtung weg geneigt. Durch die mehreren Aufnahmebereiche können mehrere oder gleich alle Magnetaufnahmebereiche auf einmal befüllt werden. Hierdurch können bei der Herstellung des Rotors Zeit und Kosten eingespart werden.

Eine vorteilhafte Ausführungsform sieht vor, dass die Ausrichtungseinrichtung um eine Achse der Bestückungsvorrichtung drehbar gelagert ist. Insbesondere weist die Ausrichtungseinrichtung oder die Bestückungsvorrichtung eine Rotationsachse auf. Besonders bevorzugt kann die Ausrichtungseinrichtung als ein Revolver ausgebildet sein. Zusätzlich oder alternativ kann es vorgesehen sein, dass die Aufnahmeeinrichtung und/oder die Zuführeinrichtung um eine Achse der Bestückungsvorrichtung drehbar gelagert sind. Alternativ kann es vorgesehen sein, dass die Zuführeinrichtung und die Ausrichtungseinrichtung zusammen als Revolver ausgebildet sind.

Gemäß einer vorteilhaften Weiterbildung ist es vorgesehen, dass der zumindest eine Kanal zu einer Außenfläche der Ausrichtungseinrichtung hin geöffnet ausgebildet ist, wobei sich die Außenfläche der Ausrichtungseinrichtung senkrecht von der Stirnseite der Ausrichtungseinrichtung zu der gegenüberliegenden Stirnseite der Ausrichtungseinrichtung erstreckt. Mit anderen Worten ist der Kanal bevorzugt zu einer Mantelfläche der Ausrichtungseinrichtung hin geöffnet ausgebildet. Besonders bevorzugt ist in einer Öffnung des zumindest einen Kanals zumindest ein Bremselement, insbesondere eine Bürste, angeordnet, welches dazu eingerichtet ist, eine Fallgeschwindigkeit der Magnete, welche durch Schwerkraft in dem zumindest einen Kanal fallen, in dem zumindest einen Kanal zu regulieren. Insbesondere erstreckt sich die Öffnung von der Stirnseite der Ausrichtungseinrichtung zur gegenüberliegenden Stirnseite der Ausrichtungseinrichtung. Insbesondere verläuft die Öffnung in einem vorbestimmten Winkel geneigt zu der Haupterstreckungsrichtung der Bestückungsvorrichtung. Insbesondere stimmt eine Länge der Öffnung, insbesondere in die Haupterstreckungsrichtung, mit einer Länge des zumindest einen Kanals überein. Durch die Öffnung ist der Kanal insbesondere in zwei Kanalbereiche unterteilt. Ein erster Kanalbereich der Kanalbereiche kann dazu eingerichtet sein, die Magnete aufzunehmen und auszurichten. Ein zweiter Kanalbereich der Kanalbereiche kann dazu eingerichtet sein, das Bremselement aufzunehmen. Mit Hilfe des Bremselements kann auf besonders einfache Art und Weise eine Geschwindigkeit bei der Befüllung oder bei der Zuführung der Magnete eingestellt oder kontrolliert beziehungsweise reguliert werden.

In vorteilhafter Weise weist die Bestückungsvorrichtung eine Bewegungseinrichtung auf, welche insbesondere zumindest einen Stößel umfasst, wobei die Bewegungseinrichtung dazu eingerichtet ist, eine Kraft, insbesondere in die Haupterstreckungsrichtung der Bestückungsvorrichtung, auf die Magnete in dem zumindest einen Kanal auszuüben. Insbesondere ist die Bewegungseinrichtung dazu eingerichtet, auf die Magnete in dem Kanal zu drücken oder die Magnete in dem Kanal runterzudrücken. Weist die Ausrichtungseinrichtung mehrere Kanäle auf, so kann die Bewegungseinrichtung bevorzugt mehrere Stößel aufweisen, wobei in jedem Kanal ein Stößel angeordnet oder jeweils einem Kanal ein Stößel zugeordnet oder zugewiesen ist. Mit "Stößel" ist insbesondere ein, bevorzugt zylindrisches, Bauteil zur Übertragung von, insbesondere stoßartigen, Bewegungen von einem Maschinenelement auf ein anderes, also insbesondere die Magnete, gemeint.

Eine weitere vorteilhafte Ausführungsform sieht vor, dass die Bestückungsvorrichtung ein Schiebeelement aufweist, welches an der Stirnseite, an welcher der Kanalauslass angeordnet ist, angeordnet ist, wobei das Schiebeelement dazu eingerichtet ist, in einer Halteposition zumindest einen Kanalauslass zu versperren und in einer Freigabeposition den zumindest einen Kanalauslass freizugeben. Ferner ist das Schiebeelement senkrecht zur Haupterstreckungsrichtung der Bestückungsvorrichtung, welche sich senkrecht zur Ebene der jeweiligen Stirnseite der Ausrichteinrichtung erstreckt, insbesondere linear, verschiebbar gelagert. Bevorzugt ist das Schiebelement plattenförmig oder als Platte ausgebildet. Insbesondere weist das Schiebeelement eine rechteckige Form auf. Ferner ist das Schiebelement derart ausgebildet, dass das Schiebelement dazu eingerichtet ist, in der Halteposition die Stirnseite vollständig zu bedecken oder überdecken.

Weist die Bestückungsvorrichtung die Aufnahmeeinrichtung auf, so sieht eine alternative vorteilhafte Ausführungsform vor, dass die Bestückungsvorrichtung ein Schiebeelement aufweist, welches an einer der Ausrichtungseinrichtung gegenüberliegenden Unterseite der Aufnahmeeinrichtung angeordnet ist. Das Schiebeelement ist dazu eingerichtet, in einer Halteposition zumindest einen Aufnahmebereichauslass zu versperren und in einer Freigabeposition den zumindest einen Aufnahmebereichauslass freizugeben, wobei das Schiebeelement senkrecht zur Haupterstreckungsrichtung der Bestückungsvorrichtung, welche sich senkrecht zur Ebene der jeweiligen Stirnseite der Ausrichteinrichtung erstreckt, verschiebbar gelagert ist. Ferner kann das Schiebelement derart ausgebildet sein, dass das Schiebelement dazu eingerichtet ist, in der Halteposition die Unterseite der Aufnahmeeinrichtung vollständig zu bedecken oder überdecken. Durch das Schiebelement kann auf besonders einfache und zuverlässige Art und Weise ein Zeitpunkt vorgegebenen werden, zu welchem die Magnete in Magnetaufnahmebereiche des Rotors gefördert werden.

Zu der Erfindung gehört auch ein System, welches einen Rotor, insbesondere für eine elektrische Maschine, und eine Bestückungsvorrichtung aufweist. Dabei ist die Bestückungsvorrichtung nach der erfindungsgemäßen Bestückungsvorrichtung ausgebildet. Bevorzugt ist der Rotor feststehend im System ausgebildet. Mit feststehend ist insbesondere gemeint, dass sich der Rotor, insbesondere beim Bestücken oder Einführen der Magnete in den Rotor, nicht bewegt oder stationär ist. Die Magnetaufnahmebereiche sind insbesondere kanalförmig ausgebildet und erstrecken sich von einer Stirnseite des Rotors zu einer gegenüberliegenden Stirnseite des Rotors in eine Haupterstreckungsrichtung des Rotors. Dabei fällt die Haupterstreckungsrichtung des Rotors insbesondere mit der Haupterstreckungsrichtung der Bestückungsvorrichtung zusammen.

Gemäß einer vorteilhaften Ausführungsform ist es vorgesehen, dass das Schiebeelement zwischen dem Rotor und der Ausrichtungseinrichtung angeordnet ist, wobei der Rotor Magnetaufnahmebereiche aufweist, wobei jeweils ein Magnetaufnahmebereich jeweils einem Kanal oder Kanalauslass der Ausrichtungseinrichtung zugeordnet ist, wobei eine Orientierung des Kanalauslasses an eine Orientierung der Magnetaufnahmebereiche angepasst ist. Die Magnetaufnahmebereiche sind in eine Umfangsrichtung des Rotors nebeneinander angeordnet, wobei die Magnetaufnahmebereiche in einem vorbestimmten Winkel geneigt zu einem Radius des Rotors angeordnet sind. Bevorzugt ist das Schiebeelement dazu eingerichtet, sich aus der Halteposition, in der das Schiebeelement den Kanalauslass versperrt, in die Freigabeposition, in der das Schiebelement den Kanalauslass freigibt, zu bewegen, sobald der Kanal mit Magneten zumindest teilweise, also vollständig oder teilweise, befüllt ist.

Umfasst die Bestückungsvorrichtung bevorzugt die Aufnahmeeinrichtung, so sieht eine alternative vorteilhafte Ausführungsform vor, dass das Schiebeelement zwischen dem Rotor und der Aufnahmeeinrichtung angeordnet ist, wobei der Rotor Magnetaufnahmebereiche aufweist, wobei jeweils ein Magnetaufnahmebereich jeweils einem Aufnahmebereich der Aufnahmeeinrichtung zugeordnet ist, wobei eine Orientierung der Aufnahmebereiche an eine Orientierung der Magnetaufnahmebereiche angepasst ist. Die Magnetaufnahmebereiche sind dabei in eine Umfangsrichtung des Rotors nebeneinander angeordnet, wobei die Magnetaufnahmebereiche in einem vorbestimmten Winkel geneigt zu einem Radius des Rotors angeordnet sind. Bevorzugt ist das Schiebeelement dazu eingerichtet ist, sich aus der Halteposition, in der das Schiebeelement den Aufnahmebereichauslass versperrt, in die Freigabeposition, in der das Schiebelement den Aufnahmebereichauslass freigibt, zu bewegen, sobald der Aufnahmebereich mit Magneten zumindest teilweise, also vollständig oder teilweise, befüllt ist.

Schließlich gehört zu der Erfindung noch ein Verfahren zum Einführen von Magneten in Magnetaufnahmebereiche eines Rotors einer elektrischen Maschine mit einer Bestückungsvorrichtung. In einem ersten Verfahrensschritt werden Magnete bereitgestellt. Anschließend werden die Magnete, insbesondere radial, in zumindest einen Zuführbereich der Zuführeinrichtung, insbesondere mittels der Beförderungseinheit, geschoben, wodurch die Magnete, insbesondere einzeln nacheinander, von dem Zuführbereich über zumindest einen Kanaleinlass in den Kanal gelangen und darin ausgerichtet werden.

In vorteilhafter Weise wird der Kanal zumindest teilweise mit Magneten befüllt. Zusätzlich oder alternativ kann in einem weiteren Verfahrensschritt das Schiebeelement aus der Halteposition, in der das Schiebeelement den zumindest einen Kanalauslass versperrt, in die Freigabeposition, in der das Schiebelement den zumindest einen Kanalauslass freigibt, bewegt werden, sobald der zumindest eine Kanal mit Magneten zumindest teilweise oder voll befüllt ist. Zusätzlich oder alternativ können in einem weiteren Verfahrensschritt die Magnete von dem zumindest einen Kanal in den dem zumindest einen Kanal zugeordneten Magnetaufnahmebereich des Rotors gefördert oder eingeführt oder zugeführt werden.

Umfasst die Bestückungsvorrichtung bevorzugt die Aufnahmeeinrichtung, so sieht eine alternative vorteilhafte Ausführungsform vor, dass zumindest ein Aufnahmebereich der Aufnahmeeinrichtung durch die durch den Kanal in den zumindest einen Aufnahmebereich, welcher dem Kanal zugeordnet ist, geförderten Magnete befüllt wird. Zusätzlich oder alternativ kann in einem weiteren Verfahrensschritt das Schiebeelement aus der Halteposition, in der das Schiebeelement den Aufnahmebereichauslass versperrt, in die Freigabeposition, in der das Schiebelement den Aufnahmebereichauslass freigibt, bewegt werden, sobald der Aufnahmebereich mit Magneten zumindest teilweise befüllt ist. Zusätzlich oder alternativ können in einem weiteren Verfahrensschritt die Magnete von dem Aufnahmebereich in den dem Aufnahmebereich zugeordneten Magnetaufnahmebereich des Rotors gefördert werden.

Zu der Erfindung gehören auch Weiterbildungen des erfindungsgemäßen Systems und des erfindungsgemäßen Verfahrens, die Merkmale aufweisen, wie sie bereits im Zusammenhang mit den Weiterbildungen der erfindungsgemäßen Bestückungsvorrichtung beschrieben worden sind. Aus diesem Grund sind die entsprechenden Weiterbildungen des erfindungsgemäßen Systems und des erfindungsgemäßen Verfahrens hier nicht noch einmal beschrieben.

Ein Ausführungsbeispiel wird im Folgenden anhand der beigefügten Zeichnungen näher erläutert. Darin zeigt:
- Fig. 1: eine schematische Darstellung eines Rotors einer elektrischen Maschine, wobei Magnete in einer vorbestimmten Orientierung in Magnetaufnahmebereichen des Rotors angeordnet sind, in einer Schnittdarstellung;
- Fig. 2: eine schematische Darstellung einer Ausführungsform eines Ausschnitts eines Systems mit einer Bestückungsvorrichtung, welche eine Zuführeinrichtung und eine Ausrichtungseinrichtung umfasst, und einem Rotor, in einer Perspektivansicht;
- Fig. 3a: eine schematische Darstellung eines Kanals der Ausrichtungseinrichtung, welcher gegen den Uhrzeigersinn verdreht ist, in einer Schnittdarstellung;
- Fig. 3b: eine schematische Darstellung eines Kanals der Ausrichtungseinrichtung, welcher im Uhrzeigersinn verdreht ist, in einer Schnittdarstellung;
- Fig. 4: eine schematische Darstellung des Systems mit der Ausrichtungseinrichtung mit einem Ausschnitt zwei nebeneinander angeordneter Kanäle, welche im und gegen den Uhrzeigersinn verdreht sind, und dem Rotor in einer Schnittdarstellung;
- Fig. 5: eine schematische Darstellung des Systems mit einer weiteren Ausführungsform der Bestückungsvorrichtung mit einer Zuführeinrichtung und einer Ausrichtungseinrichtung in einer Perspektivansicht;
- Fig. 6: eine schematische Darstellung des Systems von Fig. 5 in einer Perspektivansicht;
- Fig. 7: eine schematische Darstellung des Systems von Fig. 5 in einer Draufsicht;
- Fig. 8: eine schematische Darstellung einer weiteren Ausführungsform der Bestückungsvorrichtung mit einer Bewegungseinrichtung in einer Schnittdarstellung;
- Fig. 9: eine schematische Darstellung einer weiteren Ausführungsform der Bestückungsvorrichtung mit geöffneten Kanälen der Ausrichtungseinrichtung in einer Schnittdarstellung;
- Fig. 10: eine schematische Darstellung des Systems mit der Bestückungsvorrichtung von Fig. 9 in einer Perspektivansicht;
- Fig. 11: eine schematische Darstellung des Systems mit einer weiteren Ausführungsform der Bestückungsvorrichtung, welche eine Zuführeinrichtung, eine Ausrichtungseinrichtung, eine Aufnahmeeinrichtung und ein Schiebeelement umfasst, und dem Rotor in einer Perspektivansicht;
- Fig. 12: eine schematische Darstellung des Systems von Fig. 11 in einer weiteren Perspektivansicht; und
- Fig. 13: eine schematische Darstellung der Systems von Fig. 11 in einer Seitenansicht.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

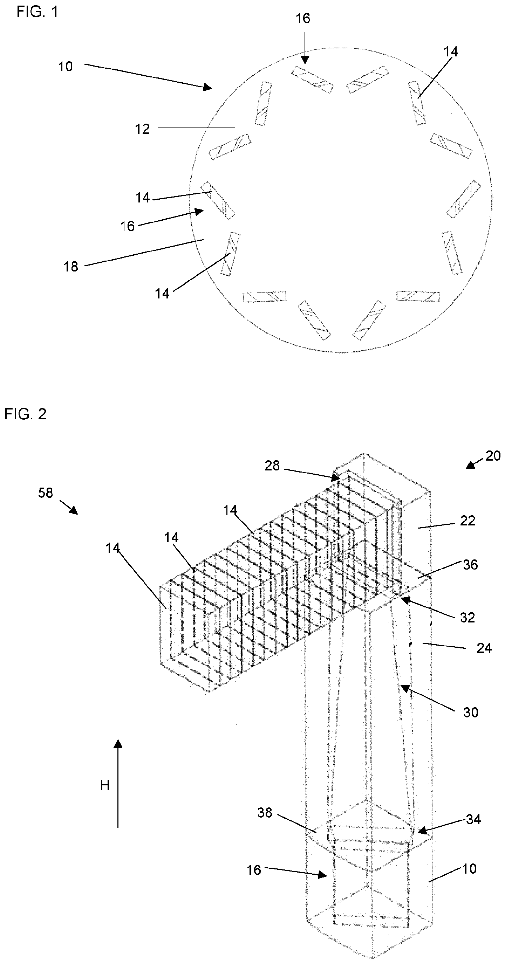

Fig. 1 zeigt in einer schematischen Darstellung einen Rotor 10 für eine elektrische Maschine. Unter elektrischen Maschinen werden insbesondere Maschinen zum Umwandeln elektrischer Energie in Bewegungsenergie und/oder Maschinen zum Umwandeln von Bewegungsenergie in elektrische Energie verstanden. Insbesondere sind darunter Elektromotoren und Generatoren zu verstehen.

Der Rotor 10 umfasst ein Blechpaket 12 und Magnete 14. Der Übersichtlichkeit halber sind nicht alle Magnete 14 mit einem Bezugszeichen versehen. Die Magnete 14 sind im Blechpaket 12 des Rotors 10 aufgenommen. Hierzu umfasst der Rotor 10 Magnetaufnahmebereiche 16, in denen die Magnete 14 angeordnet oder aufgenommen sind. Die Magnetaufnahmebereiche 16 sind insbesondere an eine Form der Magnete 14 angepasst. Hierbei weisen die Magnete 14 im Querschnitt eine rechteckige Form auf. Entsprechend sind die Magnetaufnahmebereiche 16 im Querschnitt ebenfalls rechteckig ausgebildet. Die Magnetaufnahmebereiche 16 sind als Kanal oder Durchgang oder Vertiefung ausgebildet. Insbesondere erstrecken sich die Magnetaufnahmebereiche 16, insbesondere gerade oder in eine Haupterstreckungsrichtung des Rotors 10, von einer Stirnseite 18 des Rotors 10 zu einer gegenüberliegenden Stirnseite des Rotors 10 in die Haupterstreckungsrichtung. Insbesondere erstreckt sich die Haupterstreckungsrichtung des Rotors 10 in Richtung einer Rotationsachse des Rotors 10. Die Magnetaufnahmebereiche 16 und/oder die Magnete 14 sind in einer Umfangsrichtung des Rotors 10, insbesondere in einem vorbestimmten Abstand zueinander, nebeneinander angeordnet. Die Magnete 14 und/oder die Magnetaufnahmebereiche 16 weisen eine vorbestimmte Orientierung im Rotor 10 oder im Blechpaket 12 des Rotors 10 auf. Das Blechpaket 12 des Rotors 10 weist eine zylindrische Form auf. Wie Fig. 1 zu entnehmen ist, sind die Magnete 14 und/oder die Magnetaufnahmebereiche 16 abwechselnd zu einem Radius des Blechpakets 12 des Rotors 10 hin oder von einem Radius des Blechpakets 12 des Rotors 10 weg geneigt. Insgesamt sind die Magnetaufnahmebereiche 16 oder die Magnete 14 in einer Zickzackanordnung im Rotor 10 oder im Blechpaket 12 des Rotors 10 angeordnet.

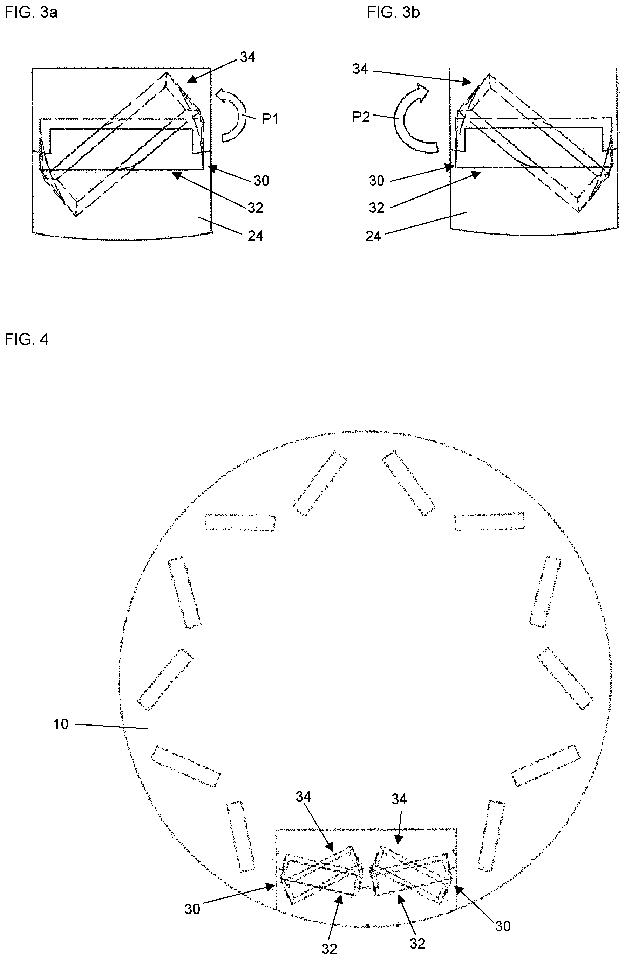

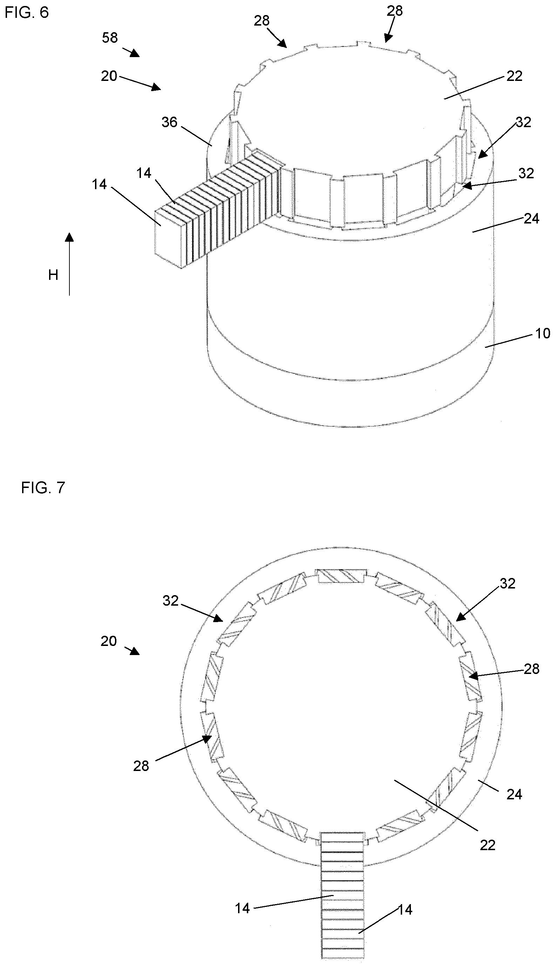

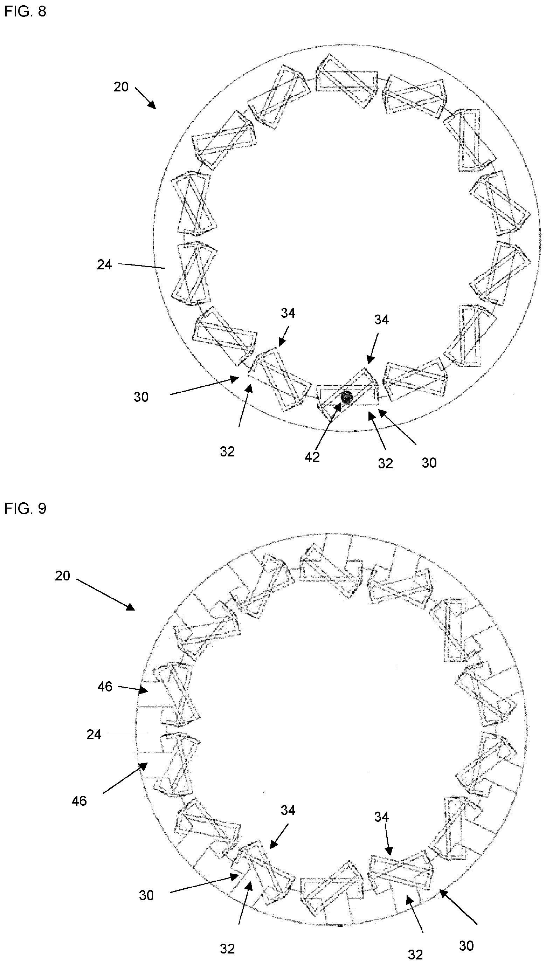

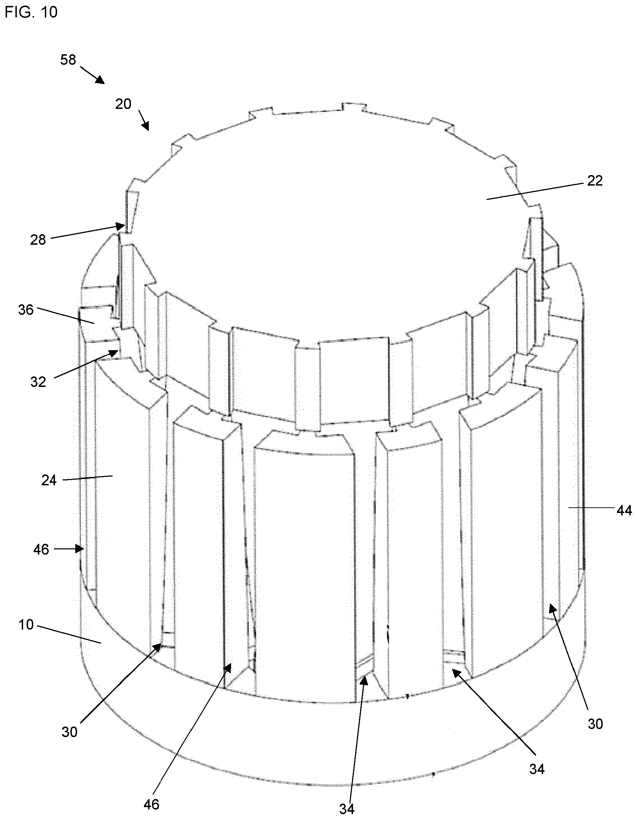

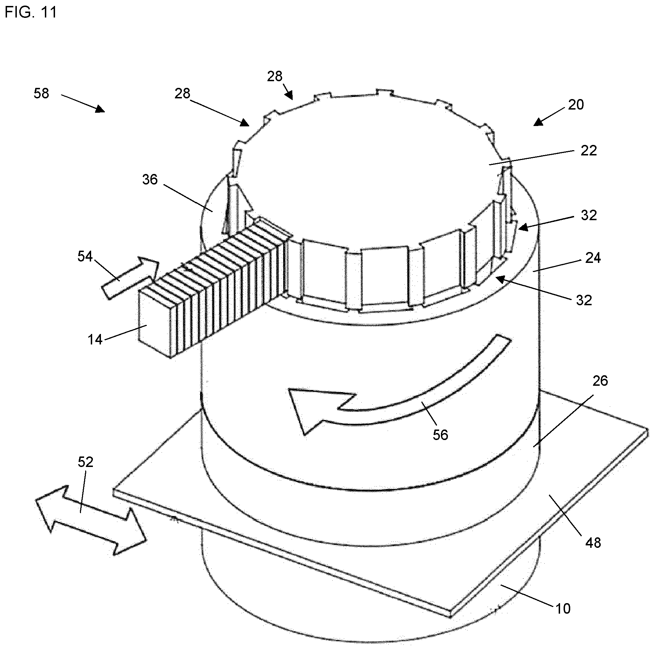

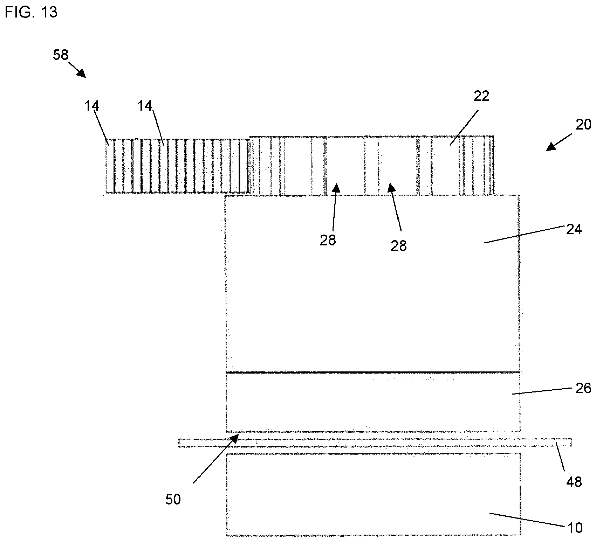

Um die Magnete 14 in eine vorbestimmte Anordnung oder Orientierung, insbesondere in die Magnetaufnahmebereiche 16 des Rotors 10, bringen zu können, ist eine Bestückungsvorrichtung 20 vorgesehen. Fig. 2, Fig. 3A und Fig. 3B zeigen einen Ausschnitt des Systems mit der Bestückungsvorrichtung 20. Figuren Fig. 4 bis Fig. 8 zeigen das System 58 mit einer weiteren Ausführungsform der Bestückungsvorrichtung 20. Figuren Fig. 9 und Fig. 10 zeigen das System 58 mit einer weitere Ausführungsform der Bestückungsvorrichtung 20. Figuren Fig. 11 bis Fig. 13 zeigen ein System 58 mit einer weiteren Ausführungsform der Bestückungsvorrichtung 20 und dem Rotor 10. Im Zusammenhang der Figuren Fig. 2 bis Fig. 10 soll auf das System 58 sowie die Bestückungsvorrichtung 20 mit ihren Ausführungsformen und ein Verfahren zum Bestücken des Rotors 10 mit den Magneten 14 näher eingegangen werden.

Wie Fig. 2 zu entnehmen ist, umfasst das System 58 die Bestückungsvorrichtung 20, welche eine Zuführeinrichtung 22 und eine Ausrichtungseinrichtung 24 aufweist, und den Rotor 10. Anstelle, dass der Rotor 10 an die Ausrichtungseinrichtung 24 angrenzt, kann es, wie in den Figuren Fig. 11 bis Fig. 13 gezeigt, vorgesehen, sein, dass eine Aufnahmeeinrichtung 26 an die Ausrichtungseinrichtung 24 angrenzt. Anstelle, dass also der Rotor 10 an die Ausrichtungseinrichtung 24 angrenzt kann es vorgesehen sein, dass die Aufnahmeeinrichtung 26, nach der schematischen Anordnung wie sie in den Figuren Fig. 2 bis Fig. 5 gezeigt ist, an die Ausrichtungseinrichtung 24 angrenzt.

Die Ausrichtungseinrichtung 24 ist, insbesondere in eine Hochrichtung oder Haupterstreckungsrichtung H der Bestückungsvorrichtung 20 oder des Systems 58, zwischen der Zuführeinrichtung 22 und dem Rotor 10 oder der Aufnahmeeinrichtung 26 angeordnet. Die Zuführeinrichtung 22 ist dazu eingerichtet, Magnete 14 der Ausrichtungseinrichtung 24 zuzuführen. Hierzu weist die Zuführeinrichtung 22 zumindest einen Zuführbereich 28 auf. Der Zuführbereich 28 ist dazu eingerichtet, jeweils einen Magnet 14 aufzunehmen. Der Zuführbereich 28 weist eine Öffnung auf, über welche jeweils ein Magnet 14 der Magnete dem Zuführbereich 28 zuführbar ist. Durch die einseitige Öffnung weist der Zuführbereich 28 bevorzugt eine U-förmige Form auf. Mit anderen Worten kann der Zuführbereich 28 durch eine U-förmige Vertiefung in der Zuführeinrichtung 22 gebildet sein. Eine Form des Zuführbereichs 28 ist insbesondere an eine Form oder eine Kontur des aufzunehmenden Magnets 14 angepasst. Ferner weist die Bestückungsvorrichtung 20 eine Beförderungseinheit (in Figuren nicht dargestellt) auf, welche dazu eingerichtet ist, die Magnete 14, insbesondere radial, dem Zuführbereich 28 zuzuführen. Eine Ausrichtung oder Orientierung des Zuführbereichs 28 ist an eine Ausrichtung oder Orientierung des Kanaleinlasses 32 angepasst.

Die Ausrichtungseinrichtung 24 weist zumindest einen Kanal 30 auf, welcher dazu eingerichtet ist, die Magnete 14 aufzunehmen und auszurichten. Eine Form des zumindest einen Kanals 30 ist insbesondere an eine Form oder eine Kontur des Magnets 14 angepasst. Die Magnete 14 gelangen über einen Kanaleinlass 32 in den Kanal 30 und werden über einen dem Kanaleinlass 32 gegenüberliegenden Kanalauslass 34 aus dem Kanal 30 abgeführt. Dabei ist der Kanaleinlass 32 an einer Stirnseite 36 der Ausrichtungseinrichtung 24 und der Kanalauslass 34 an einer der Stirnseite 36 gegenüberliegenden Stirnseite 38 der Ausrichtungseinrichtung 24 angeordnet. Bevorzugt weist der Kanalauslass 34 oder ein Endbereich des Kanals 30, welcher in den Kanalauslass 34 mündet, eine trichterförmige Form auf. Damit der Magnet 14 oder die Magnete 14, insbesondere einzeln nacheinander, durch den zumindest einen Kanal 30 gleiten oder rutschen oder sich bewegen können, ist eine Ausdehnung oder Abmessung des Kanals 30, insbesondere bezogen auf einen Querschnitt der Bestückungsvorrichtung 20, bevorzugt größer als eine Ausdehnung oder Abmessung des Magnets 14 oder der Magnete.

Der zumindest eine Zuführbereich 28 der Zuführeinrichtung 22 ist dem Kanal 30 der Ausrichtungseinrichtung 24 zugeordnet oder zugewiesen. Dabei sind der zumindest eine Zuführbereich 28 und der zumindest eine Kanal 30 in die Haupterstreckungsrichtung H der Bestückungsvorrichtung 20 derart aneinander angeordnet, dass ein Magnet 14 von dem Zuführbereich 28 über den Kanaleinlass 32 in den Kanal 30 einführbar ist.

Von dem zumindest einen Kanal 30 der Ausrichtungseinrichtung 24 gelangen die Magnete 14 über den Kanalauslass 34 in den Rotor 10 oder das Blechpaket 12 des Rotors 10. Hierzu weist der Rotor 10 die Magnetaufnahmebereiche 16 auf. Die Magnetaufnahmebereiche 16 sind als ein Kanal oder Durchgang ausgebildet. Dabei ist eine Form des Magnetaufnahmebereichs 16, insbesondere im Querschnitt, an eine Form der Magnete 14 angepasst. Ferner ist eine Orientierung oder Ausrichtung der Magnetaufnahmebereiche 16 an eine Orientierung oder Ausrichtung des Kanalauslasses 34 angepasst. Die Magnetaufnahmebereiche 16 erstrecken sich, insbesondere gerade in die Haupterstreckungsrichtung des Rotors 10 oder des Systems 58, von der einen Stirnseite 18 des Rotors 10, welche insbesondere dem Kanalauslass 34 zugewandt ist, zu einer gegenüberliegenden Stirnseite des Rotors 10 oder des Blechpakets 12. Die Magnetaufnahmebereiche 16 sind dazu eingerichtet, die Magnete 14, insbesondere in die Hochrichtung oder Haupterstreckungsrichtung des Rotors 10 oder des Systems 58, aufzunehmen. Bevorzugt werden die Magnete 14 in den Magnetaufnahmebereichen 16 des Blechpakets 12 in die Hochrichtung oder Haupterstreckungsrichtung H des Systems 58 oder des Rotors 10 übereinandergestapelt.

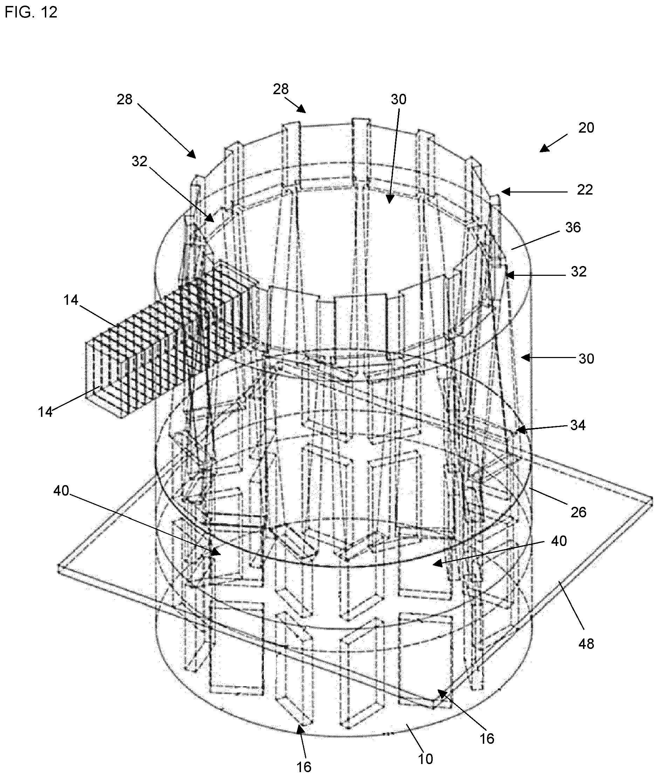

Umfasst das System 58, wie es in den Figuren Fig. 11 bis Fig. 13 gezeigt ist, die Aufnahmeeinrichtung 26, so gelangen die Magnete 14 von dem zumindest einen Kanal 30 der Ausrichtungseinrichtung 24 über den Kanalauslass 34 zunächst in die Aufnahmeeinrichtung 26. Die Aufnahmeeinrichtung 26 ist bevorzugt als eine Ladeplatte ausgebildet. Die Aufnahmeeinrichtung 26 weist, wie in Fig. 12 gezeigt ist, zumindest einen Aufnahmebereich 40 auf. Der zumindest eine Aufnahmebereich 40 ist als ein Kanal oder Durchgang ausgebildet. Dabei ist eine Form des Aufnahmebereichs 40, insbesondere im Querschnitt, an eine Form der Magnete 14 angepasst. Ferner ist eine Orientierung oder Ausrichtung des zumindest einen Aufnahmebereichs 40 an eine Orientierung oder Ausrichtung des Kanalauslasses 34 angepasst. Der Aufnahmebereich 40 erstreckt sich, insbesondere gerade in die Haupterstreckungsrichtung H der Bestückungsvorrichtung 20, von einer Stirnseite der Aufnahmeeinrichtung 40, welche insbesondere dem Kanalauslass 34 zugewandt ist, zu einer gegenüberliegenden Stirnseite der Aufnahmeeinrichtung 40. Der zumindest eine Aufnahmebereich 40 ist dazu eingerichtet, die Magnete 14, insbesondere in die Hochrichtung oder Haupterstreckungsrichtung H des Systems 58 oder der Bestückungsvorrichtung 20, aufzunehmen. Bevorzugt werden die Magnete 14 in dem Aufnahmebereich 40 der Aufnahmeeinrichtung 26 in die Hochrichtung oder Haupterstreckungsrichtung H des Systems 58 oder der Bestückungsvorrichtung 20 übereinandergestapelt.

Wie Figuren Fig. 3A und Fig. 3B zu entnehmen ist, ist der zumindest eine Kanal 30 der Ausrichtungseinrichtung 24 in sich verdreht. Mit "in sich verdreht" ist insbesondere gemeint, dass der zumindest eine Kanal 30 um eine Achse gedreht ist. Insbesondere weist der Kanaleinlass 32 eine andere Orientierung oder Ausrichtung auf als der Kanalauslass 34. In Fig. 3A ist der zumindest eine Kanal 30 gegen den Uhrzeigersinn gedreht oder verdreht, wie durch den Pfeil P1 verdeutlicht. In Fig. 3B ist der zumindest eine Kanal 30 im Uhrzeigersinn gedreht oder verdreht, wie durch den Pfeil P2 verdeutlicht.

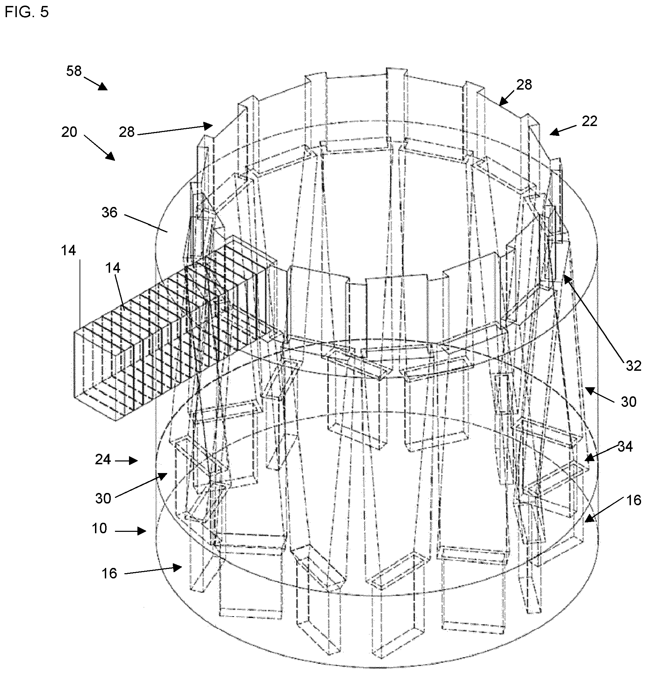

Wie Fig. 4 und Fig. 5 zu entnehmen ist, weist die Ausrichtungseinrichtung 24 mehrere Kanäle 30 auf, wobei die Kanäle 30 in eine Umfangsrichtung der Ausrichtungseinrichtung 24 nebeneinander in der Ausrichtungseinrichtung 24 angeordnet sind. Der Übersichtlichkeit halber sind nicht alle Kanäle 30, Zuführbereiche 28 oder Magnetaufnahmebereiche 16 mit einem Bezugszeichen versehen. Dabei erstrecken sich die Kanäle 30 durch die Ausrichtungseinrichtung 24, insbesondere in die Haupterstreckungsrichtung H der Bestückungsvorrichtung 20, von der Stirnseite 36 der Ausrichtungseinrichtung 24 zu der gegenüberliegenden Stirnseite 38 der Ausrichtungseinrichtung 24. Die Kanäle 30 sind abwechselnd im Uhrzeigersinn und gegen den Uhrzeigersinn in sich verdreht, insbesondere sind die Kanäle 30 ausgehend von dem Kanaleinlass 32 derart verdreht, dass die Kanalauslässe 34 eine andere Orientierung aufweisen als die Kanaleinlässe 32.

Wie Fig. 5 zu entnehmen ist, weist die Zuführeinrichtung 22 der Bestückungsvorrichtung 20 mehrere Zuführbereiche 28 und der Rotor 10 oder das Blechpaket 12 des Rotors 10 mehrere Magnetaufnahmebereiche 16 auf. Insbesondere sind jeweils ein Zuführbereich 28, ein Kanal 30 und ein Magnetaufnahmebereich 16 einander zugewiesen. In den Ausführungsbeispielen weist die Bestückungsvorrichtung 20 14 Zuführbereiche 28, 14 Kanäle und 14 Magnetaufnahmebereiche 16 auf. Ferner ist eine Orientierung oder Ausrichtung der Magnetaufnahmebereiche 16 an eine Orientierung oder Ausrichtung des den Magnetaufnahmebereich 16 zugeordneten Kanalauslasses 34 angepasst. Wie Fig. 5 zu entnehmen ist, sind die Magnetaufnahmebereiche 16 abwechselnd zu einem Radius des Rotors 10 hin oder von einem Radius des Rotors 10 weg geneigt. Insgesamt sind die Magnetaufnahmebereiche 16 in einer Zickzackanordnung in dem Blechpaket 12 angeordnet.

Umfasst das System 58, wie es in den Figuren Fig. 11 bis Fig. 13 gezeigt ist, noch die Aufnahmeeinrichtung 26, so weist die Aufnahmeeinrichtung 26 der Bestückungsvorrichtung 20 bevorzugt mehrere Aufnahmebereiche 40 auf. Insbesondere sind jeweils ein Zuführbereich 28, ein Kanal 30 und ein Aufnahmebereich 40 und/oder ein Magnetaufnahmebereich 16 des Rotors 10 einander zugewiesen. In den Ausführungsbeispielen weist die Bestückungsvorrichtung 20 14 Zuführbereiche 28, 14 Kanäle und 14 Aufnahmebereiche 40 und/oder 14 Magnetaufnahmebereiche 16 auf. Ferner ist eine Orientierung oder Ausrichtung der Aufnahmebereiche 40 an eine Orientierung oder Ausrichtung des den Aufnahmebereich 40 zugeordneten Kanalauslasses 34 angepasst. Die Aufnahmebereiche 40 der Aufnahmeeinrichtung 26 sind dabei wie die Magnetaufnahmebereiche 16 des Rotors 10 ausgerichtet. Wie dies analog Fig. 5 für den Rotor 10 zu entnehmen ist, sind die Aufnahmebereiche 40 der in den Fig. 11 bis 13 dargestellten Aufnahmeeinrichtung 26 abwechselnd zu einem Radius der Aufnahmeeinrichtung 26 hin oder von einem Radius der Aufnahmeeinrichtung 26 weg geneigt. Insgesamt sind die Aufnahmebereiche 40 in einer Zickzackanordnung in der Aufnahmeeinrichtung 26 angeordnet.

Wie Fig. 5 bis Fig. 7 zu entnehmen ist, weist die Zuführeinrichtung 22 mehrere Zuführbereiche 28 auf. Dabei ist jeweils ein Zuführbereich 28 einem Kanaleinlass 32 der Kanäle 30 der Ausrichtungseinrichtung 24 zugeordnet oder zugewiesen. Die Zuführeinrichtung 22, die Ausrichtungseinrichtung 24 und die Aufnahmeeinrichtung 26 weisen, wie Fig. 5, Fig. 6, Fig. 11 und Fig. 12 zu nehmen ist, eine zylindrische Form auf. Wie Fig. 5 bis Fig. 7 zu entnehmen ist, werden die Magnete 14 dem jeweiligen Zuführbereich 28 der Zuführeinrichtung 22 radial zugeführt oder in den entsprechenden Zuführbereich 28 eingeführt oder eingeschoben.

Ferner kann, wie Fig. 8 zu entnehmen ist, die Bestückungsvorrichtung 20 eine Bewegungseinrichtung 42 aufweisen. Die Bewegungseinrichtung 42 kann beispielsweise als ein Stößel ausgebildet sein. Die Bewegungseinrichtung 42 ist dazu eingerichtet, eine Kraft, insbesondere in die Haupterstreckungsrichtung H der Bestückungsvorrichtung 20, auf die Magnete 14 in dem Kanal 30 oder den Kanälen 30, auszuüben. Beispielsweise kann die Bewegungseinrichtung 42 über den Kanaleinlass 32 in den jeweiligen Kanal 30 geführt werden. Bevorzugt weist die Bestückungsvorrichtung 30 mehrere Bewegungseinrichtungen 42 beziehungsweise Stößel auf. Insbesondere ist jedem Kanal 30 eine Bewegungseinrichtung 42 zugeordnet oder zugewiesen.

Figuren Fig. 9 und Fig. 10 zeigen eine weitere Ausführungsform oder Weiterbildung der Ausrichtungseinrichtung 24 der Bestückungsvorrichtung 20 des Systems 58. Um eine Fallgeschwindigkeit der einzelnen Magnete 14 in dem Kanal 30 oder den Kanälen 30 zu regulieren, kann die Bestückungsvorrichtung 20 ein Bremselement aufweisen. Hierzu sind die Kanäle 30 zu einer Außenfläche 44 der Ausrichtungseinrichtung 24 hin geöffnet. Die Außenfläche 44 erstreckt sich senkrecht von der Stirnseite 36 der Ausrichtungseinrichtung 24 zu der gegenüberliegenden Stirnseite 38 der Ausrichtungseinrichtung 24. Da die Ausrichtungseinrichtung 24 eine zylindrische Form aufweist, kann die Außenfläche 44 auch als eine Mantelfläche ausgebildet sein. Die Stirnseiten oder Stirnflächen bilden bevorzugt die kreisrunden einander gegenüberliegenden Grundflächen. In der Öffnung 46 oder den, insbesondere in Umfangsrichtung der Ausrichtungseinrichtung 24 angeordneten, Öffnungen 46 ist das Bremselement oder sind mehrere Bremselemente angeordnet oder aufgenommen. Das Bremselement kann beispielsweise als eine Bürste ausgebildet sein. Durch die Öffnung 46 kann der Kanal oder können die Kanäle 30 zumindest bereichsweise T-förmig ausgebildet sein. Durch die Öffnung 46 ist der Kanal in 2 Kanalbereiche oder Kanalabschnitte aufgeteilt. Der erste Kanalbereich ist wie der bereits im Zusammenhang mit den Figuren Fig. 2 bis Fig. 8 beschriebene Kanal 30 ausgebildet. Der zweite Kanalbereich oder die Öffnung 46 erstreckt sich von dem erste Kanalbereich zu der Außenfläche 44 der Ausrichtungseinrichtung 24 hin. Ferner kann sich die Öffnung 46 von der Stirnseite 36 der Ausrichtungseinrichtung 24 zu der gegenüberliegenden Stirnseite 38 der Ausrichtungseinrichtung 24 hin erstrecken.

Wie Figuren Fig. 11 bis Fig. 13 zu entnehmen ist, weist das System 58 eine Ausführungsform der Bestückungsvorrichtung 20 und den Rotor 10 auf. Gemäß der Ausführungsform von Fig. 11 bis Fig. 13 weist die Bestückungsvorrichtung 20 ferner ein Schiebeelement 48 auf. Das Schiebeelement 48 ist als Platte oder plattenförmiges Element oder Werkstück ausgebildet. Das Schiebeelement 48 ist an einer der Ausrichtungseinrichtung 24 gegenüberliegenden Unterseite 50 der Aufnahmeeinrichtung 26 angeordnet. Dabei ist das Schiebeelement 48 derart ausgebildet, dass das Schiebeelement 48 die Unterseite 50 der Aufnahmeeinrichtung 26 vollständig bedeckt. Das Schiebeelement 48 ist dazu eingerichtet, in einer Halteposition zumindest einen Aufnahmebereichauslass, bevorzugt alle Aufnahmebereichauslässe, zu versperren oder zu verschließen oder abzudecken und in einer Freigabeposition den zumindest einen Aufnahmebereichsauslass, insbesondere die Aufnahmebereichauslässe, freizugeben oder zu öffnen. Hierzu ist das Schiebeelement 48, wie durch den Pfeil 52 verdeutlicht, senkrecht zur Haupterstreckungsrichtung H der Bestückungsvorrichtung 20 verschiebbar gelagert. Mit anderen Worten kann das Schiebeelement 48 zwischen der Halteposition und der Freigabeposition hin und her bewegt werden.

Die radiale Schiebung oder Bewegung oder Beförderung der Magnete 14 in den Zuführbereich 28 ist durch den Pfeil 54 verdeutlicht. Ferner ist die Ausrichtungseinrichtung 24 um eine Achse der Bestückungsvorrichtung 20, wie durch den Pfeil 56 verdeutlicht, drehbar gelagert. Bevorzugt ist die Ausrichtungseinrichtung 24 als ein Revolver ausgebildet. Das Schiebeelement 48 ist zwischen dem Rotor 10 und der Aufnahmeeinrichtung 26 angeordnet. Ferner sind die Zuführeinrichtung 22 und die Aufnahmeeinrichtung 26 miteinander gekoppelt oder verbunden.

Im Folgenden wird noch das Verfahren zum Einführen oder Bestücken des Rotors 10 einer elektrischen Maschine mit Magneten genauer beschrieben:
In einem ersten Verfahrensschritt werden Magnete 14 bereitgestellt. Wie in Fig. 11 zu nehmen ist, sind die Magnete 14 aneinander angeordnet. Anschließend werden die Magnete 14, insbesondere radial, in zumindest einen Zuführbereich 28 der Zuführeinrichtung 22, insbesondere mittels der Beförderungseinheit, geschoben. Hierdurch gelangen die Magnete 14, insbesondere einzeln nacheinander, von dem Zuführbereich 28 über den zumindest einen Kanaleinlass 32 in den Kanal 30 und werden darin ausgerichtet. Von dem Kanal 30 gelangen die Magnete 14 direkt in den an den Kanal 30 angeschlossenen Aufnahmebereich 40 der Aufnahmeeinrichtung 26. Der Aufnahmebereich 40 wird durch die durch den Kanal 30 geförderten Magnete 14 befüllt. In dem Aufnahmebereich 40 sind die Magnete 14 übereinandergestapelt. Solange der Aufnahmebereich 40 mit Magneten 14 befüllt wird, befindet sich das Schiebeelement 48 in der Halteposition, in der das Schiebeelement 48 den Aufnahmebereichauslass versperrt. Ist der Aufnahmebereich 40 befüllt, also vollständig oder teilweise, so wird das Schiebeelement 48 in die Freigabeposition bewegt, in der das Schiebelement 48 den Aufnahmebereichauslass freigibt. Hierdurch werden in einem weiteren Verfahrensschritt die Magnete 14 von dem Aufnahmebereich 40 in den dem Aufnahmebereich 40 zugeordneten Magnetaufnahmebereich 16 des Rotors 10 gefördert.

Im Folgenden wird ein alternatives Ausführungsbeispiel beschrieben:
Die Ausrichtungseinrichtung 24 kann auch als Revolver ausgeführt werden. Hierzu ist die Magnetzuführung bevorzugt stationär. Der Revolver vereinzelt die Magnete 14 und die Magnete 14 werden durch die Kanäle 30 in der richtigen Orientierung in der Aufnahmeeinrichtung 26 gesammelt. Die Magnete 14 werden durch den Stößel im Kanal 30 geschoben oder fallen durch Schwerkraft in die Kanäle 30. Die Aufnahmeeinrichtung 26 ist dabei mit dem Revolver insbesondere fest verbunden. Sobald die Aufnahmeeinrichtung 26 befüllt wurde, gibt das Schiebelement 48 die Magnete 14 frei. Anschließend können die Magnete in den Revolver geschoben werden. Der Rotor 10 kann alternativ direkt unter der Ausrichtungseinrichtung 24 bereitgestellt werden, die Bestückungsvorrichtung 20 umfasst dann also keine Aufnahmeeinrichtung 26. Der Rotor 10 ist dabei insbesondere feststehend. Durch die feststehende Zuführung werden Magnete 14 bereitgestellt.

Insgesamt zeigen die Beispiele, wie durch die Erfindung eine Vorrichtung zur automatisierten Bestückung von Magneten in einen Rotor bereitgestellt wird.

Die Magnete werden der Vorrichtung zugeführt und vereinzelt. In der Vorrichtung sind Kanäle, die in sich verdreht und um ein gewisses Maß größer sind, als die Magnete. In den Kanälen können die Magnete in die richtige Orientierung gleiten, ohne sich dabei vollständig zu drehen.

Hierdurch sind die Magnete in der Orientierung, wie sie im Rotor benötigt werden. Dabei können je nach Ausführung der Kanäle die Magnete sowohl im als auch gegen den Uhrzeigersinn gedreht werden.

Die Vorrichtung kann auch als Revolver ausgeführt werden. Hierzu ist die Magnetzuführung stationär. Der Revolver vereinzelt die Magnete. Die Magnete werden geschoben oder fallen durch Schwerkraft in die Kanäle. Der Rotor kann direkt unter der Vorrichtung bereitgestellt werden. Es ist sowohl eine horizontale als auch eine vertikale Variante möglich. Der Rotor ist dabei insbesondere feststehend.

Die Kanäle können so ausgeführt werden, dass Stößel die Magnete in den Rotor drücken können.

Die Kanäle können auch offen gestaltet werden. Zum Beispiel können Bürsten zum Bremsen der Magnete montiert werden.

Im Folgenden ist beispielhaft eine Vorrichtung mit einer Ladeplatte oder Aufnahmeeinrichtung und einem Schieber oder einem Schiebelement beschrieben:
Durch die feststehende Zuführung werden Magnete bereitgestellt. Der Revolver vereinzelt die Magnete und diese werden durch die Kanäle in der richtigen Orientierung in der Ladeplatte, also der Aufnahmeeinrichtung, gesammelt. Die Ladeplatte ist dabei mit dem Revolver fest verbunden. Sobald die Ladeplatte befüllt wurde, gibt der Schieber, also das Schiebelement, die Magnete frei. Anschließend können die Magnete in den Revolver geschoben werden.

Die Vorteile der vorliegenden Erfindung bestehen darin, dass hierdurch bewegte Teile reduziert werden können. Ferner wird bei der Herstellung bzw. bei der Einführung der Magnete in den Rotor eine geringe Taktzeit benötigt. Zudem kann die Zuführung der Magnete linear und für jeden Magnet gleich sein.

### Bezugszeichenliste:

- 10: Rotor
- 12: Blechpaket
- 14: Magnet
- 16: Magnetaufnahmebereich
- 18: Stirnseite
- 20: Bestückungsvorrichtung
- 22: Zuführeinrichtung
- 24: Ausrichtungseinrichtung
- 26: Aufnahmeeinrichtung
- 28: Zuführbereich
- 30: Kanal
- 32: Kanaleinlass
- 34: Kanalauslass
- 36: Stirnseite
- 38: Stirnseite
- 40: Aufnahmebereich
- 42: Bewegungseinrichtung
- 44: Außenfläche
- 46: Öffnung
- 48: Schiebeelement
- 50: Unterseite
- 52: Pfeil
- 54: Pfeil
- 56: Pfeil
- 58: System
- H: Haupterstreckungsrichtung
- P1: Pfeil
- P2: Pfeil

## Patentansprüche

1. Bestückungsvorrichtung (20) zum Einführen von Magneten (14) in Magnetaufnahmebereiche (16) eines Rotors (10) einer elektrischen Maschine umfassend:
- eine Ausrichtungseinrichtung (24), welche dazu eingerichtet ist, die Magnete (14) aufzunehmen und auszurichten, wobei
- die Ausrichtungseinrichtung (24) zum Ausrichten und zum Aufnehmen der Magnete (14) zumindest einen Kanal (30) umfasst, wobei
- eine Form des zumindest einen Kanals (30) an eine Form der Magnete (14) angepasst ist, wobei
- der Kanal (30) einen Kanaleinlass (32), welcher an einer Stirnseite (36) der Ausrichtungseinrichtung (24) angeordnet ist und über welchen die Magnete (14) dem Kanal (30) zuführbar sind, und einen gegenüber dem Kanaleinlass (32) angeordneten Kanalauslass (34) aufweist, welcher an einer der Stirnseite (36) gegenüberliegenden Stirnseite (38) der Ausrichtungseinrichtung (24) angeordnet ist und über welchen die Magnete (14) aus dem Kanal (30), insbesondere zum Einführen in die Magnetaufnahmebereiche (16) des Rotors (10), abführbar sind, **dadurch gekennzeichnet, dass**
- der zumindest eine Kanal (30) in sich verdreht ist, insbesondere sodass der Kanaleinlass (32) und der Kanalauslass (34) bezogen auf eine Ebene der jeweiligen Stirnseite (36, 38) unterschiedlich zueinander ausgerichtet sind.

2. Bestückungsvorrichtung (20) nach Anspruch 1,
**dadurch gekennzeichnet, dass**
die Bestückungsvorrichtung (20) mehrere Kanäle (30) aufweist, wobei die Kanäle (30) in einer Umfangsrichtung der Ausrichtungseinrichtung (24) nebeneinander in der Ausrichtungseinrichtung (24) angeordnet sind und sich durch die Ausrichtungseinrichtung (24) von der Stirnseite (36) der Ausrichtungseinrichtung (24) zu der gegenüberliegenden Stirnseite (38) der Ausrichtungseinrichtung (24) erstrecken.

3. Bestückungsvorrichtung (20) nach Anspruch 2,
**dadurch gekennzeichnet, dass**
die jeweiligen Kanäle (30) im Uhrzeigersinn und/oder gegen den Uhrzeigersinn verdreht sind.

4. Bestückungsvorrichtung (20) nach einem der vorhergehenden Ansprüche,
**dadurch gekennzeichnet, dass**
die Bestückungsvorrichtung (20) eine Zuführeinrichtung (22) aufweist, welche dazu eingerichtet ist, die Magnete (24) einzeln dem zumindest einen Kanal (30) über den Kanaleinlass (32) der Ausrichtungseinrichtung (24) zuzuführen.

5. Bestückungsvorrichtung (20) nach Anspruch 4,
**dadurch gekennzeichnet, dass**
5.1 die Zuführeinrichtung (22) zumindest einen Zuführbereich (28) aufweist, welcher dazu eingerichtet ist, jeweils einen Magnet (14) aufzunehmen, wobei der zumindest eine Zuführbereich (28) dem zumindest einen Kanal (30) der Ausrichtungseinrichtung (24) zugeordnet ist, wobei der zumindest eine Zuführbereich (28) und der zumindest eine Kanal (30) in die Haupterstreckungsrichtung (H) der Bestückungsvorrichtung (20), welche sich senkrecht zur Ebene der jeweiligen Stirnseite (36; 38) der Ausrichteinrichtung (24) erstreckt, derart aneinander angeordnet sind, dass ein Magnet (40) von dem Zuführbereich (28) über den Kanaleinlass (32) in den Kanal (30) einführbar ist; und/oder
5.2 die Zuführeinrichtung (22) eine Beförderungseinheit umfasst, wobei die Beförderungseinheit dazu eingerichtet ist, die Magnete (14) radial in den zumindest einen Zuführbereich (28) der Zuführeinrichtung (22) zu schieben.

6. Bestückungsvorrichtung (20) nach einem der vorhergehenden Ansprüche, **dadurch gekennzeichnet, dass**
die Bestückungsvorrichtung (20) eine Aufnahmeeinrichtung (26) aufweist, welche insbesondere als eine Ladeplatte ausgebildet ist, wobei die Aufnahmeeinrichtung (26) dazu eingerichtet ist, die Magnete (14) von der Ausrichtungseinrichtung (24) aufzunehmen, wobei die Aufnahmeeinrichtung (26) zumindest einen Aufnahmebereich (40) aufweist, wobei der zumindest eine Aufnahmebereich (40) dem zumindest einen Kanal (30) zugeordnet ist, wobei die dem Kanal (30) zugeführten Magnete (14) über den Kanalauslass (34) dem dem Kanal (30) zugeordneten Aufnahmebereich (40) zuführbar sind, wobei insbesondere zum Zuführen der Magnete (14) in den zumindest einen Aufnahmebereich (40) eine Orientierung des zumindest einen Aufnahmebereichs (40) an eine Orientierung des Kanalauslasses (34) angepasst ist.

7. Bestückungsvorrichtung (20) nach einem der vorhergehenden Ansprüche, **dadurch gekennzeichnet, dass**
7.1 die Ausrichtungseinrichtung (24) um eine Achse der Bestückungsvorrichtung (20) drehbar gelagert ist und/oder
7.2 die Ausrichtungseinrichtung (24) als ein Revolver ausgebildet ist und/oder
7.3 die Aufnahmeeinrichtung um eine Achse der Bestückungsvorrichtung drehbar ist.

8. Bestückungsvorrichtung (20) nach einem der vorhergehenden Ansprüche, **dadurch gekennzeichnet, dass**
8.1 der zumindest eine Kanal (30) zu einer Außenfläche (44) der Ausrichtungseinrichtung (24) hin geöffnet ausgebildet ist, wobei sich die Außenfläche (44) der Ausrichtungseinrichtung (24) senkrecht von der Stirnseite (36) der Ausrichtungseinrichtung (24) zu der gegenüberliegenden Stirnseite (38) der Ausrichtungseinrichtung (24) erstreckt; und/oder
8.2 in einer Öffnung (46) des zumindest einen Kanals (30) zumindest ein Bremselement, insbesondere eine Bürste, angeordnet ist, welches dazu eingerichtet ist, eine Fallgeschwindigkeit der Magnete (14), welche durch Schwerkraft in dem zumindest einen Kanal fallen, in dem zumindest einen Kanal (30) zu regulieren.

9. Bestückungsvorrichtung (20) nach einem der vorhergehenden Ansprüche, **dadurch gekennzeichnet, dass**
die Bestückungsvorrichtung (20) eine Bewegungseinrichtung (42), welche insbesondere zumindest einen Stößel umfasst, aufweist, wobei die Bewegungseinrichtung (42) dazu eingerichtet ist, eine Kraft auf die Magnete (14) in dem zumindest einen Kanal (30) auszuüben.

10. Bestückungsvorrichtung (20) nach einem der vorhergehenden Ansprüche, **dadurch gekennzeichnet, dass**
die Bestückungsvorrichtung (20) ein Schiebeelement (48) aufweist, welches an der Stirnseite (38), an welcher der Kanalauslass (34) angeordnet ist, angeordnet ist, wobei das Schiebeelement (48) dazu eingerichtet ist, in einer Halteposition zumindest einen Kanalauslass (34) zu versperren und in einer Freigabeposition den zumindest einen Kanalauslass (34) freizugeben, wobei das Schiebeelement (48) senkrecht zur Haupterstreckungsrichtung (H) der Bestückungsvorrichtung (20), welche sich senkrecht zur Ebene der jeweiligen Stirnseite (36; 38) der Ausrichteinrichtung (24) erstreckt, verschiebbar gelagert ist.

11. Bestückungsvorrichtung (20) nach Anspruch 6,
**dadurch gekennzeichnet, dass**
die Bestückungsvorrichtung (20) ein Schiebeelement (48) aufweist, welches an einer der Ausrichtungseinrichtung (24) gegenüberliegenden Unterseite der Aufnahmeeinrichtung (26) angeordnet ist, wobei das Schiebeelement (48) dazu eingerichtet ist, in einer Halteposition zumindest einen Aufnahmebereichauslass zu versperren und in einer Freigabeposition den zumindest einen Aufnahmebereichauslass freizugeben, wobei das Schiebeelement (48) senkrecht zur Haupterstreckungsrichtung (H) der Bestückungsvorrichtung (20), welche sich senkrecht zur Ebene der jeweiligen Stirnseite (36; 38) der Ausrichteinrichtung (24) erstreckt, verschiebbar gelagert ist.

12. System (58) umfassend:
- einen Rotor (10), insbesondere für eine elektrische Maschine, wobei insbesondere der Rotor (10) feststehend im System (58) ausgebildet ist; und
- eine Bestückungsvorrichtung (20) zum Ausrichten und Einführen von Magneten (14) in den Rotor (10) nach einem der vorhergehenden Ansprüche.

13. System (58) nach Anspruch 12, in Rückbezug auf Anspruch 11,
**dadurch gekennzeichnet, dass**
13.1 das Schiebeelement (48) zwischen dem Rotor (10) und der Ausrichtungseinrichtung (24) oder der Aufnahmeeinrichtung (26) angeordnet ist, wobei der Rotor (10) Magnetaufnahmebereiche (16) aufweist, wobei jeweils ein Magnetaufnahmebereich (16) jeweils einem Aufnahmebereich (40) der Aufnahmeeinrichtung (26) zugeordnet ist, wobei eine Orientierung der Aufnahmebereiche (40) an eine Orientierung der Magnetaufnahmebereiche (16) angepasst ist, wobei die Magnetaufnahmebereiche (16) in eine Umfangsrichtung des Rotors (10) nebeneinander angeordnet sind, wobei die Magnetaufnahmebereiche (16) in einem vorbestimmten Winkel geneigt zu einem Radius des Rotors (10) angeordnet sind; und/oder
13.2 das Schiebeelement (48) dazu eingerichtet ist, sich aus der Halteposition, in der das Schiebeelement (48) den zumindest einen Kanalauslass (34) oder den Aufnahmebereichauslass versperrt, in die Freigabeposition, in der das Schiebelement (48) den zumindest einen Kanalauslass (34) oder den Aufnahmebereichauslass freigibt, zu bewegen, sobald der zumindest eine Kanal (30) oder der Aufnahmebereich (40) mit Magneten (14) teilweise oder voll befüllt ist.

14. Verfahren zum Einführen von Magneten (14) in Magnetaufnahmebereiche (16) eines Rotors (10) einer elektrischen Maschine mit einer Bestückungsvorrichtung (20) nach einem der Ansprüche 1 bis 11, in Rückbezug auf Anspruch 4 oder 5, umfassend die Schritte:
- Bereitstellen von Magneten (14);
- Schieben, insbesondere radial, der Magnete (14) in zumindest einen Zuführbereich (28) der Zuführeinrichtung (22), insbesondere mittels der Beförderungseinheit, wodurch die Magnete (14), insbesondere einzeln nacheinander, von dem Zuführbereich (28) über zumindest einen Kanaleinlass (32) in den Kanal (30) gelangen und darin ausgerichtet werden.

15. Verfahren nach Anspruch 14, in Rückbezug auf Anspruch 6 oder 11, **gekennzeichnet durch** die Schritte:
- Befüllen des zumindest einen Kanals (30) der Ausrichtungseinrichtung (20) mit Magneten (14) oder zumindest eines Aufnahmebereichs (40) der Aufnahmeeinrichtung (26) durch die durch den Kanal (30) in den zumindest einen Aufnahmebereich (40), welcher dem Kanal (30) zugeordnet ist, geförderten Magnete (14); und/oder
- Bewegen des Schiebeelements (48) aus der Halteposition, in der das Schiebeelement (48) den zumindest einen Kanalauslass (34) oder den Aufnahmebereichauslass versperrt, in die Freigabeposition, in der das Schiebelement (48) den zumindest einen Kanalauslass (34) oder den Aufnahmebereichauslass freigibt, sobald der zumindest eine Kanal (30) oder der Aufnahmebereich (40) mit Magneten (14) teilweise oder voll befüllt ist; und/oder
- Fördern der Magnete (14) von dem zumindest einen Kanal (30) oder den Aufnahmebereich (40) in den dem zumindest einen Kanal (30) oder dem Aufnahmebereich (40) zugeordneten Magnetaufnahmebereich (16) des Rotors (10).

## Claims

1. Mounting apparatus (20) for inserting magnets (14) into magnet accommodating portions (16) of a rotor (10) of an electric machine, comprising:
- an aligning device (24) configured for accommodating and aligning the magnets (14), wherein
- the aligning device (24) for aligning and accommodating the magnets (14) comprises at least one channel (30), wherein
- a shape of the at least one channel (30) is adapted to a shape of the magnets (14), wherein
- the channel (30) has a channel inlet (32), which is disposed at an end face (36) of the aligning device (24) and via which the magnets (14) can be fed to the channel (30), and a channel outlet (34), which is disposed opposite the channel inlet (32) and is disposed at an end face (38) of the aligning device (24) opposite the end face (36) and via which the magnets (14) can be discharged from the channel (30), in particular for insertion into the magnet accommodating portions (16) of the rotor (10),
**characterized in that**
- the at least one channel (30) is twisted in itself, in particular in such a way that the channel inlet (32) and the channel outlet (34), with respect to a plane of the respective end face (36, 38), are aligned differently to each other.

2. Mounting apparatus (20) according to claim 1,
**characterized in that**
the mounting apparatus (20) has several channels (30), wherein the channels (30) are disposed side-by-side in the aligning device (24) in a circumferential direction of the aligning device (24) and extend through the aligning device (24) from the end face (36) of the aligning device (24) to the opposite end face (38) of the aligning device (24).

3. Mounting apparatus (20) according to claim 2,
**characterized in that**
the respective channels (30) are twisted in a clockwise and/or counterclockwise direction.

4. Mounting apparatus (20) according to any one of the preceding claims,
**characterized in that**
the mounting apparatus (20) has a feeding device (22) configured for feeding the magnets (24) individually to the at least one channel (30) via the channel inlet (32) of the aligning device (24).

5. Mounting apparatus (20) according to claim 4,
**characterized in that**
5.1 the feeding device (22) has at least one feeding region (28) configured for accommodating one magnet (14) in each case, wherein the at least one feeding region (28) is associated with the at least one channel (30) of the aligning device (24), wherein the at least one feeding region (28) and the at least one channel (30) are arranged next to each other in the main extending direction (H) of the mounting apparatus (20), which extends perpendicular to the plane of the respective end face (36; 38) of the aligning device (24), in such a way that a magnet (40) can be inserted from the feeding region (28) via the channel inlet (32) into the channel (30); and/or
5.2 the feeding device (22) includes a transporting unit, wherein the transporting unit is configured for pushing the magnets (14) radially into the at least one feeding region (28) of the feeding device (22).

6. Mounting apparatus (20) according to any one of the preceding claims, **characterized in that**
the mounting device (20) has an accommodating device (26), which is configured, in particular, as a loading plate, wherein the accommodating device (26) is configured for accommodating the magnets (14) from the aligning device (24), wherein the accommodating device (26) has at least one accommodating portion (40), wherein the at least one accommodating portion (40) is assigned to the at least one channel (30), wherein the magnets (14) fed to the channel (30) can be fed via the channel outlet (34) to the accommodating portion (40) assigned to the channel (30), wherein, in particular for feeding the magnets (14) into the at least one accommodating portion (40), an orientation of the at least one accommodating portion (40) is adapted to an orientation of the channel outlet (34).

7. Mounting apparatus (20) according to any one of the preceding claims, **characterized in that**
7.1 the aligning device (24) is rotatably supported about an axis of the mounting apparatus (20), and/or
7.2 the aligning device (24) is configured as a turret, and/or
7.3 the accommodating device is rotatably supported about an axis of the mounting apparatus.

8. Mounting apparatus (20) according to any one of the preceding claims, **characterized in that**
8.1 the at least one channel (30) is configured to open towards an outer surface (44) of the aligning device (24), wherein the outer surface (44) of the aligning device (24) extends perpendicularly from the end face (36) of the aligning device (24) to the opposite end face (38) of the aligning device (24); and/or
8.2 at least one braking member, particularly a brush, which is adapted for regulating a fall velocity of the magnets (14), which fall by gravity in the at least one channel (30), in the at least one channel (30).

9. Mounting apparatus (20) according to any one of the preceding claims, **characterized in that**
mounting apparatus (20) has a moving device (42) which, in particular, comprises at least one plunger, wherein the mounting device (42) is configured for exerting a force on the magnets (14) in the at least one channel (30).

10. Mounting apparatus (20) according to any one of the preceding claims, **characterized in that**
the mounting apparatus (20) has a sliding member (48) disposed at the end face (38) on which the channel outlet (34) is disposed, wherein the sliding member (48) is configured for shutting at least one channel outlet (34) in a holding position and for clearing the at least one channel outlet (34) in a clearing position, wherein the sliding member (48) is slidably supported in a direction perpendicular to the main extending direction (H) of the mounting apparatus (20) which extends perpendicular to the plane of the respective end face (36; 38) of the aligning device (24).

11. Mounting apparatus (20) according to claim 6,
**characterized in that**
the mounting apparatus (20) has a sliding member (48) disposed at an underside of the accommodating device (26) opposite the aligning device (24), wherein the sliding member (48) is configured for shutting at least one accommodating portion outlet in a holding position and for clearing the at least one accommodating portion outlet in a clearing position, wherein the sliding member (48) is slidably supported in a direction perpendicular to the main extending direction (H) of the mounting apparatus (20) which extends perpendicular to the plane of the respective end face (36; 38) of the aligning device (24).

12. System (58) comprising:
- a rotor (10), in particular for an electric machine, wherein the rotor (10), in particular, is configured to be stationary within the system (58); and
- a mounting apparatus (20) for aligning and inserting magnets (14) into the rotor (10) according to any one of the preceding claims.

13. System (58) according to claim 12, particularly with reference to claim 11, **characterized in that**
13.1 the sliding member (48) is disposed between the rotor (10) and the aligning device (24) or the accommodating device (26), wherein the rotor (10) has magnet accommodating portions (16), wherein, in each case, one magnet accommodating portion (16) is associated in each case with one accommodating portion (40) of the accommodating device (26), wherein an orientation of the accommodating portions (40) is adapted to an orientation of the magnet accommodating portions (16), wherein the magnet accommodating portions (16) are disposed side-by-side in a circumferential direction of the rotor (10), wherein the magnet accommodating portions (16) are disposed with an inclination of a predetermined angle to a radius of the rotor (10); and/or
13.2 the sliding member (48) is configured for moving from the holding position, in which the sliding member (48) shuts the at least one channel outlet (34) or the accommodating portion outlet, into the clearing position, in which the sliding member (48) clears the at least one channel outlet (34) or the accommodating portion outlet, as soon as the at least one channel (30) or the accommodating portion (40) is partially or completely filled with magnets (14).

14. Method for inserting magnets (14) into magnet accommodating portions (16) of a rotor (10) of an electric machine with a mounting apparatus (20) according to any one of the claims 1 to 11, particularly with reference to claim 4 or 5, comprising the steps of:
- providing magnets (14);
- pushing, in particular radially, the magnets (14) into at least one feeding region (28) of the feeding device (22), particularly by means of the transporting unit, whereby the magnets (14), in particular individually one after the other, arrive in the channel (30), from the feeding region (28) via at least one channel inlet (32), and are aligned therein.

15. Method according to claim 14, particularly with reference to claim 6 or 11, **characterized by** the steps:
- filling the at least one channel (30) of the aligning device (20) with magnets (14), or at least one accommodating portion (40) of the accommodating device (26) by the magnets (14) transported through the channel (30) into the at least one accommodating portion (40) associated with the channel (30); and/or
- moving the sliding member (48) from the holding position, in which the sliding member (48) shuts the at least one channel outlet (34) or the accommodating portion outlet, into the clearing position, in which the sliding member (48) clears the at least one channel outlet (34) or the accommodating portion outlet, as soon as the at least one channel (30) or the accommodating portion (40) is partially or completely filled with magnets (14); and/or
- transporting the magnets (14) from the at least one channel (30) or the accommodating portion (40) into the magnet accommodating portion (16) of the rotor (10) associated with the at least one channel (30) or the accommodating portion (40).

## Revendications

1. Dispositif d'assemblage (20) pour insérer des aimants (14) dans des parties de logement d'aimant (16) d'un rotor (10) d'une machine électrique, comprenant:
- un dispositif d'alignement (24) configuré pour loger et aligner les aimants (14), dans lequel
- le dispositif d'alignement (24) pour aligner et loger les aimants (14) comprend au moins un canal (30), dans lequel
- la forme dudit au moins un canal (30) est adaptée à la forme des aimants (14), dans lequel
- le canal (30) a une entrée de canal (32), qui est disposée sur une face d'extrémité (36) du dispositif d'alignement (24) et par laquelle les aimants (14) peuvent être introduits dans le canal (30), et une sortie de canal (34), qui est disposée sur une surface d'extrémité (38) du dispositif d'alignement (24) à l'opposé de la face d'extrémité (36) et par laquelle les aimants (14) peuvent être déchargés du canal (30), en particulier pour être insérés dans les parties de logement de l'aimant (16) du rotor (10),
**caractérisé en ce que**
- ledit au moins un canal (30) est tordu sur lui-même, en particulier de telle sorte que l'entrée de canal (32) et la sortie de canal (34), par rapport à un plan de la face d'extrémité respective (36, 38), sont alignées différemment l'une par rapport à l'autre.

2. Dispositif d'assemblage (20) selon la revendication 1,
**caractérisé en ce que**
le dispositif d'assemblage (20) comporte plusieurs canaux (30), les canaux (30) étant disposés côte à côte dans le dispositif d'alignement (24) dans une direction circonférentielle du dispositif d'alignement (24) et s'étendent à travers le dispositif d'alignement (24) de la face d'extrémité (36) du dispositif d'alignement (24) à la face d'extrémité opposée (38) du dispositif d'alignement (24).

3. Dispositif d'assemblage (20) selon la revendication 2,
**caractérisé en ce que**
les canaux respectifs (30) sont tordus dans le sens des aiguilles d'une montre et/ou dans le sens inverse des aiguilles d'une montre.

4. Dispositif d'assemblage (20) selon l'une quelconque des revendications précédentes,
**caractérisé en ce que**
le dispositif d'assemblage (20) comporte un dispositif d'alimentation (22) configuré pour alimenter les aimants (24) individuellement dans ledit au moins un canal (30) via l'entrée de canal (32) du dispositif d'alignement (24).

5. Dispositif d'assemblage (20) selon la revendication 4,
**caractérisé en ce que**
5. 1 le dispositif d'alimentation (22) a au moins une zone d'alimentation (28) configurée pour recevoir un aimant (14) dans chaque cas, dans lequel ladite au moins une zone d'alimentation (28) est associée à l'au moins un canal (30) du dispositif d'alignement (24), dans lequel ladite au moins une zone d'alimentation (28) et l'au moins un canal (30) sont disposés l'un à côté de l'autre dans la direction d'extension principale (H) du dispositif d'assemblage (20), qui s'étend perpendiculairement au plan de la face d'extrémité respective (36; 38) du dispositif d'alignement (24), de manière à ce qu'un aimant (40) puisse être inséré dans le canal (30) à partir de la zone d'alimentation (28) via l'entrée de canal (32); et/ou
5.2 le dispositif d'alimentation (22) comprend une unité de transport, l'unité de transport étant configurée pour pousser les aimants (14) radialement dans ladite au moins une zone d'alimentation (28) du dispositif d'alimentation (22).

6. Dispositif d'assemblage (20) selon l'une quelconque des revendications précédentes, **caractérisé en ce que**
le dispositif d'assemblage (20) comporte un dispositif de logement (26), configuré notamment comme une plaque de chargement, dans lequel le dispositif de logement (26) est configuré pour recevoir les aimants (14) du dispositif d'alignement (24), dans lequel le dispositif de logement (26) comporte au moins une partie de logement (40), dans lequel ladite au moins une partie de logement (40) est affectée à l'au moins un canal (30), dans lequel les aimants (14) alimentés dans le canal (30) peuvent être introduits via la sortie de canal (34) dans la partie de logement (40) affectée au canal (30), dans lequel, en particulier pour introduire les aimants (14) dans ladite au moins une partie de logement (40), une orientation de ladite au moins une partie de logement (40) est adaptée à une orientation de la sortie de canal (34).

7. Dispositif d'assemblage (20) selon l'une quelconque des revendications précédentes, **caractérisé en ce que**
7.1 le dispositif d'alignement (24) est supporté de manière rotative autour d'un axe du dispositif d'assemblage (20) et/ou
7.2 le dispositif d'alignement (24) est configuré comme une tourelle, et/ou
7.3 le dispositif de logement est supporté de manière rotative autour d'un axe du dispositif d'assemblage.

8. Dispositif d'assemblage (20) selon l'une quelconque des revendications précédentes, **caractérisé en ce que**
8.1 l'au moins un canal (30) est configuré pour s'ouvrir vers une surface extérieure (44) du dispositif d'alignement (24), la surface extérieure (44) du dispositif d'alignement (24) s'étendant perpendiculairement de la face d'extrémité (36) du dispositif d'alignement (24) à la face d'extrémité opposée (38) du dispositif d'alignement (24); et/ou
8.2 au moins un élément de freinage, en particulier une brosse, qui est adapté pour réguler une vitesse de chute des aimants (14), qui tombent par gravité dans le au moins un canal (30), dans l'au moins un canal (30).

9. Dispositif d'assemblage (20) selon l'une quelconque des revendications précédentes, **caractérisé en ce que**
le dispositif d'assemblage (20) comporte un dispositif de mouvement (42) qui, en particulier, comprend au moins un plongeur, dans lequel le dispositif de mouvement (42) est configuré pour exercer une force sur les aimants (14) dans l'au moins un canal (30).

10. Dispositif d'assemblage (20) selon l'une quelconque des revendications précédentes, **caractérisé en ce que**
le dispositif d'assemblage (20) comporte un élément coulissant (48) disposé sur la face d'extrémité (38) sur laquelle la sortie de canal (34) est disposée, dans lequel l'élément coulissant (48) est configuré pour fermer au moins une sortie de canal (34) dans une position de maintien et pour libérer ladite au moins une sortie de canal (34) dans une position de libération, dans lequel l'élément coulissant (48) est supporté de manière coulissante dans une direction perpendiculaire à la direction d'extension principale (H) du dispositif d'assemblage (20) qui s'étend perpendiculairement au plan de la face d'extrémité respective (36; 38) du dispositif d'alignement (24).

11. Dispositif d'assemblage (20) selon la revendication 6,
**caractérisé en ce que**
le dispositif d'assemblage (20) comporte un élément coulissant (48) disposé sur une face inférieure du dispositif de logement (26) à l'opposé du dispositif d'alignement (24), dans lequel l'élément coulissant (48) est configuré pour fermer au moins une sortie de la partie de logement dans une position de maintien et pour libérer au moins une sortie de la partie de logement dans une position de libération, dans lequel l'élément coulissant (48) est supporté de manière coulissante dans une direction perpendiculaire à la direction d'extension principale (H) du dispositif d'assemblage (20) qui s'étend perpendiculairement au plan des faces d'extrémité respectives (36; 38) du dispositif d'alignement (24).

12. Système (58) comprenant :
- un rotor (10), en particulier pour une machine électrique, dans lequel le rotor (10), en particulier, est configuré pour être stationnaire à l'intérieur du système (58); et
- un dispositif d'assemblage (20) pour aligner et insérer les aimants (14) dans le rotor (10) selon l'une quelconque des revendications précédentes.

13. Système (58) selon la revendication 12, en particulier en référence à la revendication 11, **caractérisé en ce que**
13. 1 l'élément coulissant (48) est disposé entre le rotor (10) et le dispositif d'alignement (24) ou le dispositif de logement (26), dans lequel le rotor (10) comporte des parties de logement d'aimant (16), dans lequel, dans chaque cas, une partie de logement d'aimant (16) est associée à une partie de logement (40) du dispositif de logement (26), dans lequel une orientation des parties de logement (40) est adaptée à une orientation des parties de logement de l'aimant (16), dans lequel les parties de logement de l'aimant (16) sont disposées côte à côte dans une direction circonférentielle du rotor (10), dans lequel les parties de logement de l'aimant (16) sont disposées avec une inclinaison d'un angle prédéterminé par rapport à un rayon du rotor (10); et/ou
13.2 l'élément coulissant (48) est configuré pour passer de la position de maintien, dans laquelle l'élément coulissant (48) ferme ladite au moins une sortie de canal (34) ou la sortie de la partie de logement, à la position de libération, dans laquelle l'élément coulissant (48) libère ladite au moins une sortie de canal (34) ou la sortie de la partie de logement, dès que ledit au moins un canal (30) ou la partie de logement (40) est partiellement ou complètement rempli d'aimants (14).

14. Procédé d'insertion d'aimants (14) dans des zones de logement d'aimants (16) d'un rotor (10) d'une machine électrique avec un dispositif d'assemblage (20) selon l'une quelconque des revendications 1 à 11, en particulier en référence à la revendication 4 ou 5, comprenant les étapes consistant à:
- fournir des aimants (14);
- pousser, en particulier radialement, les aimants (14) dans au moins une zone d'alimentation (28) du dispositif d'alimentation (22), en particulier au moyen de l'unité de transport, de sorte que les aimants (14), en particulier individuellement l'un après l'autre, arrivent dans le canal (30), à partir de la zone d'alimentation (28) via au moins une entrée de canal (32), et y sont alignés.

15. Procédé selon la revendication 14, notamment en référence à la revendication 6 ou 11, **caractérisé par** les étapes suivantes:
- remplir ledit au moins un canal (30) du dispositif d'alignement (20) avec des aimants (14), ou au moins une partie de logement (40) du dispositif de logement (26) par les aimants (14) transportés à travers le canal (30) dans ladite au moins une partie de logement (40) associée au canal (30); et/ou
- déplacer l'élément coulissant (48) de la position de maintien, dans laquelle l'élément coulissant (48) ferme ladite au moins une sortie de canal (34) ou la sortie de la partie de logement, à la position de libération, dans laquelle l'élément coulissant (48) libère ladite au moins une sortie de canal (34) ou la sortie de la partie de logement, dès que l'au moins un canal (30) ou la partie de logement (40) est partiellement ou complètement rempli d'aimants (14); et/ou
- transporter les aimants (14) dudit au moins un canal (30) ou de la partie de logement (40) dans la partie de logement des aimants (16) du rotor (10) associée à l'au moins un canal (30) ou à la partie de logement (40).
